# FASCICULE DE BREVET EUROPEEN

(11) **EP 4 127 301 B1**
(45) Date de publication et mention de la délivrance du brevet: **20.03.2024**
(21) Numéro de dépôt: 21713411.3
(22) Date de dépôt: 23.03.2021
(51) Int. Cl.: D06F 39/10, B01D 24/12, B01D 24/46, D06F 39/00

(54) **SYSTEME ET PROCEDE REGENERABLE DE FILTRATION DE MICROFIBRES D'UN LIQUIDE DE VIDANGE**
REGENERIERBARES SYSTEM UND VERFAHREN ZUM FILTERN VON MIKROFASERN AUS EINER ABFALLFLÜSSIGKEIT
REGENERABLE SYSTEM AND METHOD FOR FILTERING MICROFIBRES FROM A WASTE LIQUID

(30) Priorité: 03.04.2020 FR 2003351; 02.02.2021 FR 2101003
(43) Date de publication de la demande: 08.02.2023
(73) Titulaire: IFP Energies nouvelles, 92500 Rueil-Malmaison (FR)
(72) Inventeur: GAUTHIER, Thierry, 92852 RUEIL-MALMAISON CEDEX (FR); DREILLARD, Matthieu, 92852 RUEIL-MALMAISON CEDEX (FR); CARRETTE, Pierre Louis, 92852 RUEIL-MALMAISON CEDEX (FR); COMBE-LABOISSIERE, Etienne, 92852 RUEIL-MALMAISON CEDEX (FR); MAILLET, Jeremy, 92852 RUEIL-MALMAISON CEDEX (FR); PREUX, Christophe, 92852 RUEIL-MALMAISON CEDEX (FR); DE FARIA BARROS, Caroline, 92852 RUEIL-MALMAISON CEDEX (FR); PEYRET, Laurent, 92852 RUEIL-MALMAISON CEDEX (FR); DUBLOC, Mathieu, 92852 RUEIL-MALMAISON CEDEX (FR)
(74) Mandataire: IFP Energies nouvelles
(86) Numéro de dépôt international: PCT/EP2021/057473
(87) Numéro de publication internationale: WO 2021/197937

(56) Documents cités:
- EP-A1- 3 187 642
- EP-A2- 2 816 150
- CN-B- 104 514 122
- GB-A- 2 429 416

## Description

### Domaine technique

La présente invention concerne le domaine de l'élimination des microfibres contenues dans un liquide de vidange d'un dispositif de traitement de textiles, tel qu'une machine à laver le linge, une laverie (industrielle ou non), un dispositif pour teindre des textiles, ou encore un dispositif pour imperméabiliser des textiles.

Des études récentes indiquent qu'entre 20 et 35% des microplastiques retrouvés dans l'environnement marin sont des microfibres provenant de vêtements synthétiques. Ces microplastiques sont principalement libérés lors du lavage des textiles synthétiques sous forme de microfibres, du fait de l'abrasion des tissus pendant le cycle de lavage. Plus de 700 000 fibres microscopiques peuvent ainsi être rejetées dans les eaux usées lors de chaque utilisation d'une machine à laver domestique, avec un grand nombre qui risquent de passer à travers le traitement des eaux usées et donc de finir dans l'environnement.

De manière plus précise, selon certaines études, la quantité de fibres libérées pendant le lavage de textiles correspondrait à une quantité variant de 0.005 à 0.02% du poids des textiles lavés en fonction de la nature du textile. D'autres études considèrent que la libération des fibres pendant le lavage de textiles correspondrait même à une quantité variant de 0.02 à 0.1 % du poids des textiles lavés en fonction de la nature du textile.

Il s'agit donc également d'un problème de santé publique majeur puisque ce microplastique se retrouve dans l'eau et les aliments que nous consommons. D'après les dernières estimations un être humain ingère en moyenne 5 grammes de plastique chaque semaine, soit l'équivalent du poids d'une carte de crédit.

Par ailleurs, le 30 janvier 2020, la France a voté une loi relative à la lutte contre le gaspillage et à l'économie circulaire dans lequel l'article 10 bis AAB dispose que les lave-linges neufs devront être dotés d'un filtre à microfibres plastiques à compter du 1^{er} janvier 2025. La France est le premier pays au monde à prendre une telle mesure.

### Technique antérieure

On connait le document US 4906367 qui décrit un filtre tissé souple se positionnant au niveau du tuyau d'évacuation d'un lave-linge. Les principales impuretés comme les pelotes de cheveux sont retenues par ce filtre, qui doit être enlevé physiquement pour être nettoyé dès que celui-ci est colmaté. Le filtre décrit dans ce document a initialement été conçu pour protéger les canalisations d'eaux usées et non pour retenir des objets aussi petits que des microfibres. Les pores de ce filtre ne sont en effet pas assez fins pour permettre leur rétention de manière efficace. L'utilisation de pores plus petits pour ce type de filtre induirait un colmatage rapide et une durée de vie trop faible du filtre.

On connait aussi la demande WO 2017/173215, qui décrit un objet sphérique en plastique s'introduisant dans le tambour d'un lave-linge avec les vêtements à nettoyer et permettant de capturer in situ les fibres libérées grâce à de nombreuses protubérances. La géométrie de ces protubérances n'est toutefois à ce jour pas conçue pour capturer les petits objets comme les microfibres, l'efficacité de rétention des microfibres dont la longueur est supérieure à 100µm étant de seulement 26%.

On connait également la demande WO 2017/121862 qui décrit un sac en plastique filtrant tissé dans lequel on introduit les vêtements à laver et capable de retenir une partie des microfibres textiles. Le sac a des perforations dont le diamètre est compris entre 5 et 200 µm, préférentiellement 50 µm. Si le problème des microfibres est ici adressé, on peut se demander si le fait de mettre des vêtements dans un sac ne va pas nuire au lavage de ceux-ci. Notamment, les particules de salissures de plus grande taille que les microfibres ne vont pas pouvoir s'évacuer correctement. L'action mécanique du tambour risque également d'être moins efficace si les vêtements sont dans un sac. Le document ne détaille pas comment certaines microfibres ne vont pas s'échapper pas de nouveau lorsque l'on va retirer les vêtements du sac.

La demande de brevet WO 2019/017848 décrit quant à elle un système pour retenir les microfibres, à positionner en sortie d'un lave-linge, basé sur des membranes de microfiltration constituées de nanofibres de polyéthylène. La membrane présente un diamètre de pores préférentiel autour de 50 µm et est optionnellement dopée avec des nanoparticules d'oxyde d'aluminium permettant d'améliorer l'adsorption des microfibres. La membrane filtrante décrite dans ce document présente une certaine mobilité, ce qui lui permet d'avoir une fonction anti-colmatage. Toutefois, malgré cette fonction anti-colmatage, la cartouche contenant la membrane de micro-filtration commercialisée à ce jour a une durée de vie de 20 cycles de lavage. L'utilisation d'un tel filtre requiert donc une quantité importante de consommables, et donc une consommation non-négligeable de matières plastiques pour les fabriquer. De plus, les nanofibres de plastique constituant la membrane peuvent présenter un risque de détérioration lors de l'utilisation, et donc de rejet dans les eaux usées.

On connait en outre le document GB2429416A qui concerne un système de filtrage de de l'eau pour une machine à laver.

La présente invention concerne un système et un procédé pour filtrer les microfibres (plastiques ou autres) en sortie de dispositifs de traitement de textiles, et ce, de manière efficace, peu coûteuse et requérant peu de consommables. En effet, le système selon l'invention peut être régénérable, ce qui permet de fortement limiter la périodicité du selon l'invention peuvent en outre permettre la collecte d'au moins une partie des microfibres en sortie d'un dispositif de traitement de textiles, pour un éventuel recyclage ultérieur.

### Résumé de l'invention

L'invention concerne un système pour la filtration de microfibres contenues dans un effluent liquide issu d'un dispositif de traitement de textiles, ledit système étant destiné à être raccordé à une conduite pour la vidange dudit dispositif de traitement de textiles. Ledit système selon l'invention comprend au moins:
- une enceinte comprenant un milieu granulaire occupant une portion de l'espace de ladite enceinte, ledit milieu granulaire étant disposé sur un support de manière à laisser un volume libre dans ladite enceinte au-dessus dudit milieu granulaire, ledit support étant perméable au moins audit effluent liquide ;
- des moyens pour le passage par percolation dudit effluent liquide au travers dudit milieu granulaire, comprenant au moins une ouverture aménagée dans ladite enceinte (10) et disposée au-dessus dudit milieu granulaire ;
- des moyens d'évacuation dudit effluent liquide comprenant au moins une ouverture aménagée dans ladite enceinte et disposée sous ledit support dudit milieu granulaire ;
- des moyens de connexion à des moyens de régénération par fluidisation dudit milieu granulaire, comprenant au moins une ouverture aménagée dans ladite enceinte et disposée au-dessus dudit milieu granulaire.

Selon une mise en oeuvre de l'invention, lesdits moyens de connexion auxdits moyens de régénération par fluidisation dudit milieu granulaire peuvent comprendre une ouverture supplémentaire aménagée dans ladite enceinte et disposée sous ledit support dudit milieu granulaire, ladite ouverture supplémentaire desdits moyens de connexion étant apte à être connectée à des moyens pour une admission d'un gaz et/ou pour une insufflation d'un gaz. Selon une mise en oeuvre de l'invention, lesdits moyens d'évacuation dudit effluent liquide peuvent comprendre un circuit extérieur à ladite enceinte, raccordé à ladite enceinte pour court-circuiter ledit milieu granulaire en cas d'accumulation dudit effluent liquide dans ledit volume libre de ladite enceinte au-dessus dudit milieu granulaire.

Alternativement, lesdits moyens d'évacuation dudit effluent liquide peuvent comprendre une conduite traversant au moins ledit milieu granulaire pour court-circuiter ledit milieu granulaire en cas d'une accumulation dudit effluent liquide dans ledit volume libre de ladite enceinte au-dessus dudit milieu granulaire, ladite conduite étant préférentiellement munie d'un déflecteur dans sa partie supérieure.

Selon une mise en oeuvre de l'invention, ledit circuit extérieur (140) à ladite enceinte peut comporter en outre un détecteur de liquide, de préférence relié à une alarme.

Selon une mise en oeuvre de l'invention, ladite conduite (140) desdits moyens d'évacuation (110) dudit effluent liquide peut comporter en outre un détecteur de liquide, de préférence relié à une alarme.

Selon une mise en oeuvre de l'invention, ledit système peut comprendre en outre des moyens de contrôle desdits moyens de passage par percolation dudit effluent liquide au travers dudit milieu granulaire et/ou desdits moyens d'évacuation dudit effluent liquide, et/ou desdits moyens de connexion auxdits moyens de régénération par de fluidisation dudit milieu granulaire.

Selon une mise en oeuvre de l'invention, lesdits moyens de contrôle peuvent comprendre au moins une vanne 2 voies, et/ou au moins une vanne 3 voies, et/ou au moins un clapet anti-retour, et/ou une vanne 6 voies rotative.

Selon une mise en oeuvre de l'invention, ledit système peut comprendre en outre une chambre de décantation et/ou une chambre de séparation cyclonique et/ou une chambre d'accumulation dudit effluent liquide, disposées en amont de ladite enceinte, et raccordées auxdits moyens pour le passage par percolation dudit effluent liquide au travers dudit milieu granulaire.

Selon une mise en oeuvre de l'invention, ledit système peut comprendre en outre des moyens d'injection d'au moins un agent floculant dans ledit effluent liquide, lesdits moyens d'injection étant disposés pour une injection dudit au moins un agent floculant dans ledit effluent liquide en amont dudit milieu granulaire.

Selon une mise en oeuvre de l'invention, ledit milieu granulaire peut comprendre des particules de sable, des billes de verre concassé ou des billes de verre brutes, des particules formées à base de zéolithe naturelle ou synthétique, à base d'alumine, ou encore à base de résines ou de plastique.

Selon une mise en oeuvre de l'invention, ledit milieu granulaire peut comprendre des particules de taille comprise entre 0.1 mm et 2 cm pour au moins 80% en poids desdites particules, préférentiellement comprise entre 0.3 et 2.5 mm pour au moins 90% en poids desdites particules.

Selon une mise en oeuvre de l'invention, un distributeur de liquide peut être disposé entre ledit milieu granulaire (30) et ladite ouverture (100) desdits moyens (100) pour le passage par percolation dudit effluent liquide au travers dudit milieu granulaire (30) et/ou, lorsque lesdits moyens de régénération par fluidisation dudit milieu granulaire (30) comprennent des moyens d'aspiration gazeuse, un distributeur de gaz peut être disposé entre ledit milieu granulaire (30) et une ouverture destinée à l'admission du gaz desdits moyens d'aspiration gazeuse.

L'invention concerne un outre un procédé pour la filtration de microfibres contenues dans un effluent liquide issu d'un dispositif de traitement de textiles, ledit procédé pouvant être mis en oeuvre au moyen d'un système pour la filtration de microfibres selon l'un quelconque des modes de réalisation décrits ci-dessus. Ledit procédé comprend au moins les étapes suivantes :
A ) on réalise au moins une phase de filtration desdites microfibres, ladite phase de filtration comprenant au moins un passage par percolation dudit effluent liquide au travers dudit milieu granulaire au moyen au moins desdits moyens pour le passage par percolation dudit effluent liquide au travers dudit milieu granulaire, et l'évacuation dudit effluent liquide filtré au moyen au moins desdits moyens d'évacuation dudit effluent liquide ;
B) on réalise une phase de régénération par fluidisation dudit milieu granulaire en raccordant lesdits moyens de connexion auxdits moyens de régénération par fluidisation dudit milieu granulaire avec lesdits moyens de régénération par fluidisation dudit milieu granulaire.

Selon une mise en oeuvre de l'invention, on peut répéter l'étape A) entre 50 et 150 fois, de préférence environ 100 fois, avant de réaliser l'étape B).

Selon une mise en oeuvre de l'invention, ledit procédé peut comprendre, préalablement à l'étape A), une étape de prétraitement dudit effluent liquide, ladite étape de prétraitement dudit effluent liquide comprenant au moins une injection d'au moins d'un agent floculant dans ledit effluent liquide et/ou au moins une décantation dudit effluent liquide et/ou au moins une séparation cyclonique dudit effluent liquide.

Selon une mise en oeuvre de l'invention, ledit procédé peut comprendre, préalablement à l'étape B), une phase de drainage dudit milieu granulaire, réalisée au moyen de moyens d'aspiration gazeuse raccordés audit système de manière à générer un flux descendant de gaz au travers dudit milieu granulaire, et/ou une phase de séchage dudit milieu granulaire, réalisée au moyen de moyens pour augmenter la température dudit milieu granulaire.

Selon une mise en oeuvre de l'invention, on peut commander lesdites phases de filtration et de régénération au moyen desdits moyens de contrôle dudit système pour la filtration de microfibres tels que décrits ci-dessus.

Selon une mise en oeuvre de l'invention, ledit procédé peut comprendre en outre au moins une étape postérieure à ladite phase de régénération par fluidisation, consistant en la collecte desdites microfibres issues de ladite phase de régénération, de préférence au moyen d'une chambre cyclonique et/ou d'un filtre à membrane disposés en aval desdits moyens de régénération par fluidisation dudit milieu granulaire.

L'invention concerne également un dispositif de lavage de textiles, comprenant au moins un système pour la filtration de microfibres contenues dans un effluent liquide selon l'un quelconque des modes de réalisation décrits ci-dessus

### Liste des figures

La figure 1 représente un système pour la filtration de microfibres selon une première mise en oeuvre de l'invention.
Les figure 2a à 2f représentent un système pour la filtration de microfibres selon différentes variantes du premier mode de réalisation de l'invention.
Les figures 3 à 6 et 7a à 7b représentent différents modes de réalisation de moyens de contrôle du système pour la filtration de microfibres selon l'invention.
La figure 8 représente un système pour la filtration de microfibres comprenant un milieu granulaire sous la forme de trois lits de particules étagés.
La figure 9 représente un système pour la filtration de microfibres apte à effectuer une phase de drainage du milieu granulaire suivie d'une phase de séchage du milieu granulaire, préalablement à une phase de régénération du milieu granulaire.

### Description des modes de réalisation

L'invention concerne un système et un procédé pour la filtration de microfibres contenues dans un effluent liquide issu d'un dispositif de traitement de textiles.

Par "microfibres", on entend des particules issues de matériaux tissés ou tricotés, composés de fibres naturelles (coton, laine...) ou synthétiques (polyester, polyamide, acrylique...) tels que des vêtements ou des tissus utilisés dans l'habillement ou pour tout autre application (par exemple draps, rideaux, etc.) chez les particuliers ou dans l'industrie. Les microfibres, normalement entrainées dans des eaux de vidange d'un lave-linge, sont en général de forme allongée, avec des diamètres généralement compris entre 0.1 et 50 microns. La longueur des fibres peut aller de quelques diamètres de fibres jusqu'à plusieurs mm en fonction de la nature et de l'état des matériaux qui sont lavés en amont.

Par "dispositif de traitement de textiles", on entend en particulier un dispositif de lavage de textiles, par exemple une machine à laver le linge individuelle, à usage domestique ou commercial, un ensemble de machines à laver le linge (par exemple dans des laveries), une laverie industrielle (par exemple une blanchisserie) etc. Mais un dispositif de traitement de textiles selon l'invention comprend de manière générale tout dispositif mettant en contact un textile avec un liquide, le liquide étant ensuite séparé du textile, tel qu'un dispositif pour teindre un textile, ou encore un dispositif pour imperméabiliser un textile.

Par "effluent liquide issu d'au moins un dispositif de traitement de textiles", on entend le liquide issu de la vidange (par exemple le liquide après lavage et/ou rinçage et/ou essorage dans le cas d'un dispositif de lavage de textile) d'un dispositif de traitement de textiles. On parle par la suite de manière équivalente de "liquide de vidange". De manière classique, la charge en microfibres des effluents liquides en sortie de dispositifs de traitement de textiles est en général limitée, avec des teneurs comprises entre 0.1 et 1000 ppm poids, généralement comprise en 1 et 100 ppm poids.

Le système selon l'invention est destiné à être raccordé à une conduite pour la vidange d'un dispositif de traitement de textiles. Le système selon l'invention peut indifféremment être installé à l'extérieur d'un dispositif de traitement de textiles (à l'extrémité de la conduite pour la vidange du dispositif de traitement de textiles) ou à l'intérieur d'un dispositif de traitement de textiles (sur une portion de la conduite pour la vidange du dispositif de traitement de textiles).

Le principe général du système de filtration selon l'invention consiste en la filtration des microfibres contenues dans un effluent liquide issu d'un dispositif de traitement de textiles, par percolation de cet effluent liquide au travers d'un milieu granulaire se trouvant dans une enceinte. Le système selon l'invention peut être avantageusement raccordé à des moyens de régénération par fluidisation du milieu granulaire, pour éliminer les microfibres s'étant déposées dans le milieu granulaire.

Le procédé selon l'invention comprend de manière générale au moins une étape de filtration des microfibres contenues dans un effluent liquide issu d'un dispositif de traitement de textiles, par percolation de cet effluent liquide au travers d'un milieu granulaire se trouvant dans une enceinte, suivie par une étape de régénération par fluidisation du milieu granulaire. De manière préférée, la phase de régénération est réalisée au moyen d'un flux ascendant d'un gaz au travers du milieu granulaire, le gaz ascendant étant préférentiellement de l'air.

Plus précisément, le système selon l'invention comprend une enceinte, dans laquelle une portion de l'espace est occupée par un milieu granulaire, ce milieu granulaire étant surmonté par un volume libre dans l'enceinte. Selon l'invention, le milieu granulaire est disposé sur au moins un support perméable au moins à l'effluent liquide, et par conséquent aux gaz de manière générale (c'est-à-dire à tous les gaz), en particulier au gaz qui peut être utilisé pour la régénération du milieu granulaire par fluidisation au moyen d'un gaz comme cela sera décrit plus bas. Selon une mise en oeuvre de l'invention, le support du milieu granulaire peut être une grille, dont les mailles sont dimensionnées pour retenir le milieu granulaire tout en permettant le passage au moins de l'effluent liquide.

L'enceinte peut être de forme cylindrique ou parallélépipédique, et est de préférence allongée selon l'axe du flux de l'effluent liquide traversant l'enceinte (c'est-à-dire selon un axe vertical tel que cela sera décrit plus bas). Avantageusement, la section de l'enceinte peut être constante le long de la partie de l'enceinte en contact avec le milieu granulaire, et la section peut être plus grande, voire croissante, dans la partie de l'enceinte située au-dessus du milieu granulaire. Le volume libre au-dessus du milieu granulaire est ainsi augmenté, ce qui permet d'une part d'éviter le risque de refoulement de l'effluent liquide en cas d'accumulation au-dessus du milieu granulaire (qui peut survenir en cas de colmatage du milieu granulaire), et d'autre part d'améliorer la régénération du milieu granulaire, en augmentant le volume disponible pour l'expansion par fluidisation du milieu granulaire et en abaissant la vitesse du fluide de régénération au-dessus du milieu granulaire (ce qui limite l'entrainement des particules du milieu granulaire). Le milieu granulaire selon l'invention comprend au moins un lit de particules comme cela sera décrit plus bas.

Le système selon l'invention comporte en outre des moyens pour le passage par percolation de l'effluent liquide au travers du milieu granulaire. Autrement dit, selon l'invention, le milieu granulaire est traversé par un flux vertical, du haut vers le bas, de l'effluent liquide. Cela est permis dans le système selon l'invention par au moins une ouverture pour le passage de l'effluent liquide aménagée dans la partie supérieure de l'enceinte, au-dessus du milieu granulaire. Le terme "partie supérieure" est pris par référence à la direction du flux de l'effluent liquide au travers de l'enceinte, du haut vers le bas. Ainsi, cette ouverture des moyens pour le passage par percolation de l'effluent liquide au travers du milieu granulaire permet une arrivée de l'effluent liquide chargé en fibres au-dessus du milieu granulaire. Avantageusement, l'ouverture des moyens pour le passage par percolation de l'effluent liquide au travers du milieu granulaire est aménagée dans la paroi supérieure de l'enceinte du système selon l'invention, de préférence dans une partie centrale de cette paroi supérieure (par exemple située dans une zone centrée sur le barycentre de la paroi supérieure, et dont le rayon correspond à 30% de la plus petite dimension de la paroi supérieure). Une ouverture aménagée dans une partie centrale de la paroi supérieure de l'enceinte permet une distribution plus homogène latéralement de l'effluent liquide par rapport à une ouverture excentrée.

De plus, le système selon l'invention comporte des moyens d'évacuation de l'effluent liquide, ces moyens d'évacuation comprenant au moins une ouverture aménagée dans la partie inférieure de l'enceinte, et sous le support pour le milieu granulaire. Le terme "partie inférieure" est pris par référence à la direction du flux d'effluent liquide au travers de l'enceinte, du haut vers le bas. Ainsi, cette ouverture des moyens d'évacuation de l'effluent liquide permet une sortie de l'effluent liquide filtré par le milieu granulaire, dans la partie inférieure de l'enceinte, en-dessous du support du milieu granulaire. Avantageusement, l'ouverture des moyens d'évacuation de l'effluent liquide est aménagée dans la paroi inférieure de l'enceinte du système selon l'invention, pour éviter une accumulation de l'effluent liquide filtré dans le fond de l'enceinte. Selon une mise en oeuvre de l'invention, cette ouverture peut être connectée à un système d'évacuation des eaux usées, tel qu'un siphon en amont d'un dispositif de tout à l'égout. En fonction de la configuration géométrique, une pompe de relevage peut être implémentée afin d'assurer l'évacuation de l'effluent filtré.

Le système selon l'invention comporte en outre des moyens de connexion à des moyens de régénération par fluidisation du milieu granulaire, comprenant au moins une ouverture aménagée dans la partie supérieure de l'enceinte, au-dessus du milieu granulaire. Les moyens de régénération par fluidisation du milieu granulaire visent à prévenir le colmatage du milieu granulaire qui peut résulter de l'accumulation des microfibres filtrées dans le milieu granulaire. De manière générale, une fluidisation d'un milieu granulaire est classiquement obtenue par un passage de liquide ou de gaz du bas vers le haut à travers un milieu granulaire. De manière préférée, les moyens de régénération par fluidisation du milieu granulaire pouvant être connectés au système selon l'invention sont des moyens de régénération par fluidisation gazeuse. Par fluidisation gazeuse, on entend une fluidisation des particules du milieu granulaire au moyen d'un gaz. Le passage d'un gaz du bas vers haut met les particules du milieu granulaire en mouvement, ce qui se traduit par une expansion du milieu granulaire dans le volume libre au-dessus du milieu granulaire, et les fibres sont entrainées par le flux de gaz ascendant. Selon une mise en oeuvre de l'invention, le système selon l'invention peut être raccordé, via les moyens de connexion selon l'invention, à des moyens de régénération du milieu granulaire sous la forme de moyens d'aspiration gazeuse (tels qu'un aspirateur à usage domestique ou industriel) et/ou de moyens d'insufflation gazeuse (tels que des systèmes de compression ou de surpression d'air). Selon cette mise en oeuvre, le gaz utilisé pour fluidiser et régénérer le milieu granulaire peut pénétrer dans le système par l'ouverture des moyens d'évacuation de l'effluent liquide aménagée dans la partie inférieure de l'enceinte.

Les moyens de connexion aux moyens de régénération par fluidisation du milieu granulaire du système selon l'invention comprennent au moins une ouverture disposée au-dessus du milieu granulaire, dans la partie supérieure de l'enceinte. Cette ouverture permet l'évacuation des microfibres libérées du milieu granulaire par la fluidisation. De préférence, cette ouverture des moyens de connexion à des moyens de régénération par fluidisation du milieu granulaire est aménagée dans la paroi supérieure de l'enceinte du système selon l'invention, de préférence dans une partie centrale de cette paroi supérieure (par exemple située dans une zone centrée sur le barycentre de la paroi supérieure, et dont le rayon correspond à 30% de la plus petite dimension de la paroi supérieure). Une ouverture aménagée dans une partie centrale de la paroi supérieure de l'enceinte permet une régénération plus homogène latéralement du milieu granulaire par rapport à une ouverture excentrée. Comme cela sera décrit dans des modes de réalisation ultérieurs, l'ouverture des moyens pour le passage par percolation de l'effluent liquide au travers du milieu granulaire et l'ouverture des moyens de connexion à des moyens de régénération par fluidisation du milieu granulaire peuvent être communes, et leur fonction soit de filtration soit de régénération peut alors être commandée par moyens de contrôle tels que des vannes comprenant au moins trois voies. Selon une mise en oeuvre de l'invention, l'ouverture des moyens pour le passage par percolation de l'effluent liquide au travers du milieu granulaire et l'ouverture des moyens de connexion à des moyens de régénération par fluidisation du milieu granulaire peuvent être communes, et leur fonction soit de filtration soit de régénération peut être commandée par une action manuelle ou de manière automatisée.

Les moyens de régénération par fluidisation du milieu granulaire permettent d'allonger la durée de vie du système selon l'invention. Avantageusement, les moyens de régénération par fluidisation du milieu granulaire sont configurés pour éliminer les microfibres du milieu granulaire lorsque le volume accumulé de microfibres représente 0.1 à 10% de la porosité du milieu granulaire, préférentiellement 0.5 à 5% de la porosité du milieu granulaire. De cette manière, il est possible de réaliser une centaine de phases de régénération avant de remplacer le milieu granulaire du système selon l'invention.

Avantageusement, une grille peut être placée dans l'enceinte, entre l'ouverture des moyens pour le passage par percolation de l'effluent liquide au travers du milieu granulaire et le milieu granulaire, la taille des ouvertures de la grille étant inférieure à la taille des particules du milieu granulaire. Cette grille permet de retenir, à l'intérieur de l'enceinte, les particules du milieu granulaire lors de la régénération par fluidisation. De manière avantageuse, une telle grille peut aussi permettre une distribution plus homogène de l'effluent liquide sur le milieu granulaire, améliorant ainsi la qualité de filtration du système selon l'invention. Avantageusement, un brise jet peut être en outre disposé sous l'ouverture des moyens pour le passage par percolation de l'effluent liquide au travers du milieu granulaire, permettant l'introduction de l'effluent liquide de manière à disperser celui-ci et éviter ainsi qu'un jet d'effluent liquide trop puissant n'impacte le milieu granulaire. Avantageusement, un distributeur de liquide peut être en outre disposé entre l'ouverture des moyens pour le passage par percolation de l'effluent liquide au travers du milieu granulaire et le milieu granulaire. De manière générale, un distributeur de liquide permet une distribution homogène d'un liquide. Selon une mise en oeuvre de l'invention, le distributeur de liquide peut être une plaque perforée à rétention de liquide. Un tel distributeur permet de répartir uniformément le liquide sur la section du milieu granulaire.

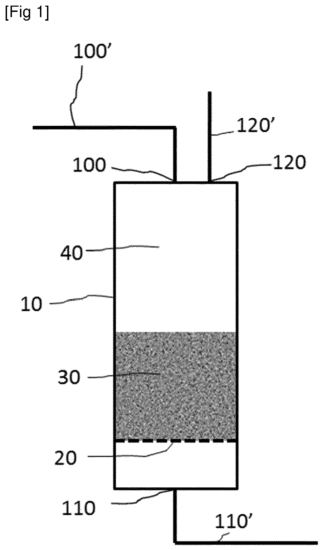

La figure 1 illustre, de manière schématique et non limitative, un premier mode de réalisation du système selon l'invention. Selon cette conception, le système pour la filtration de microfibres est constitué d'une enceinte 10 cylindrique munie d'un support 20 permettant de soutenir un milieu granulaire 30 constitué d'un lit de particules, et surmonté par un volume libre 40 permettant de contenir l'accumulation de liquide de vidange pendant la filtration et/ou de contenir une expansion des particules du lit 30 qui est fluidisé pendant la régénération. Le système selon ce mode de réalisation comprend, dans la paroi supérieure de l'enceinte10, une ouverture 100 permettant l'amenée de l'effluent liquide à filtrer, depuis une conduite de vidange 100'. Le système selon ce mode de réalisation comprend également une ouverture 120 destinée à être raccordée à des moyens (non représentés) pour la régénération par fluidisation du milieu granulaire (par exemple des moyens d'aspiration gazeuse), via une conduite 120'. Le système comprend en outre une ouverture 110 permettant l'évacuation de l'effluent liquide filtré à la base de l'enceinte 10. Cette ouverture 110 est disposée sous le milieu granulaire 30 et sous le support 20 du milieu granulaire, et peut être raccordée via à une conduite 110' à un système d'évacuation des eaux usées (non représenté), tel qu'un siphon en amont d'un dispositif de tout à l'égout.

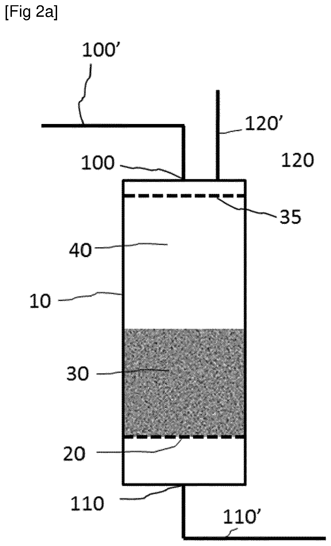

La figure 2a présente une variante du mode de réalisation de la figure 1, en tout point identique à ce premier mode de réalisation (ainsi, les éléments communs ne seront pas décrits à nouveau), à l'exception d'une grille 35 placée entre l'ouverture 120 pour la connexion avec les moyens de régénération par fluidisation (non représentés) et le milieu granulaire 30, la taille des ouvertures de la grille 35 étant inférieure à la taille des particules du milieu granulaire 30. Cette grille 35 permet de retenir, à l'intérieur de l'enceinte 10, les particules du milieu granulaire 30 lors de la régénération par fluidisation. De manière avantageuse, une telle grille 35 peut aussi permettre une distribution plus homogène de l'effluent liquide sur le milieu granulaire 30 (fonction de brise jet), arrivant par l'ouverture 100, améliorant ainsi la qualité de filtration du système selon l'invention.

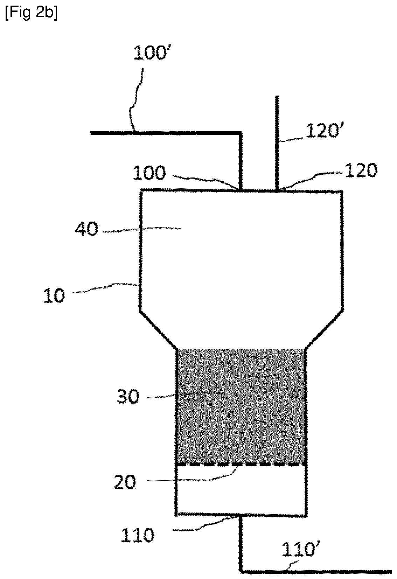

La figure 2b présente une autre variante du mode de réalisation de la figure 1, en tout point identique à ce premier mode (ainsi, les éléments communs ne seront pas décrits à nouveau), à l'exception de la forme de l'enceinte 10 qui est de forme cylindrique dans sa partie inférieure, tronconique dans une partie intermédiaire, et cylindrique dans une partie supérieure, la section de la partie supérieure étant supérieure à la section de la partie inférieure. Cette géométrie particulière de l'enceinte 10 permet d'augmenter le volume libre au-dessus du milieu granulaire, ce qui permet ainsi d'une part d'éviter le risque de refoulement de l'effluent liquide par les deux ouvertures 100, 120 situées dans la partie supérieure de l'enceinte en cas d'accumulation au-dessus du milieu granulaire 30 (qui peut survenir en cas de colmatage du milieu granulaire) et d'autre part d'améliorer la régénération du milieu granulaire, en augmentant le volume disponible pour l'expansion par fluidisation du milieu granulaire 30.

Ainsi, de manière générale, le système et le procédé selon l'invention permettent une filtration des microfibres contenues dans un liquide de vidange, par rétention des microfibres dans la porosité du milieu granulaire traversé par l'effluent. Ce type de filtration, aussi connu sous le terme de "filtration en profondeur" dans d'autres domaines, est particulièrement adapté à la capture des microfibres dont la forme allongée facilite la rétention dans la tortuosité du lit de particules. A noter qu'une partie des microfibres peuvent être aussi retenues à la surface supérieure du milieu granulaire. Le système selon l'invention est aussi apte à être raccordé à des moyens de régénération du milieu granulaire par fluidisation, permettant de nettoyer le filtre selon l'invention, et éventuellement la collecte des microfibres retenues dans la porosité du milieu granulaire.

Le milieu granulaire selon l'invention comprend au moins un lit de particules, appelé par la suite de manière équivalente "lit filtrant" ou "lit de filtration". Selon une mise en oeuvre de l'invention, le milieu granulaire peut comprendre une pluralité de lits de particules étagés, maintenus chacun par un support non étanche au moins à l'effluent liquide (le support sera donc de fait également non étanche aux gaz en général, et en particulier au gaz utilisé pour la régénération du milieu granulaire par fluidisation gazeuse). Ainsi, dans le système selon cette mise en oeuvre de l'invention, l'effluent liquide peut s'écouler par percolation au travers de chacun des lits étagés, depuis le haut vers le bas.

Le matériau constituant les particules d'un lit peut être défini par sa composition, mais aussi par sa granulométrie et sa masse volumique. Différents types de particules sont envisageables pour constituer un lit de particules, tel que décrit ci-dessous.

Selon une mise en oeuvre de l'invention, les particules d'un lit peuvent être des particules de sable, ou encore des billes de verre concassé ou des billes de verre brutes, des particules formées à base de zéolithe naturelle ou synthétique, à base d'alumine, ou encore à base de résines ou de plastique. Les matériaux cités ci-dessus présentent en effet les avantages d'être facilement accessibles dans le commerce et ont des propriétés (notamment de masse volumique comme cela sera discuté ci-dessous) adaptées à l'application visée. Selon une alternative, les particules d'un lit peuvent être constituées dans un matériau dont les propriétés de surface ont été modifiées pour favoriser la rétention des microfibres, par des phénomènes d'affinité physico-chimique avec les microfibres textiles (en modifiant les propriétés électrostatiques des particules notamment), ou encore pour limiter l'affinité de ces particules avec l'eau (via un traitement hydrophobe, en recouvrant par exemple les particules telles que des billes de verre d'un film de téflon), ce qui permet de faciliter le séchage du lit avant la régénération. Selon une autre mise en oeuvre de l'invention, on peut utiliser un mélange de particules issues de matériaux de nature différente pour un même lit, ou bien utiliser des particules issues de matériaux de nature différente d'un lit à un autre dans le cas où le milieu granulaire est formé par une pluralité de lits étagés.

De manière générale, la granulométrie des particules influe sur la capacité de filtration et de régénération du milieu granulaire vis-à-vis des microfibres, en agissant sur la résistance à l'écoulement aux fluides. Selon une mise en oeuvre avantageuse de l'invention, la taille des particules peut être comprise, pour au moins 80% en poids des particules, entre 0.1 mm et 2 cm, préférentiellement comprise, pour au moins 90% en poids des particules, entre 0.3 et 2.5 mm. De manière alternative ou combinée, le diamètre équivalent moyen des particules du milieu granulaire (défini par rapport à la distribution de taille en poids des particules) des particules peut être compris entre 0.3 et 1.35 mm, et préférentiellement compris entre 0.4 et 0.8 mm. Avantageusement, la quantité de particules ayant une taille inférieure à 0.1 mm peut être inférieure à 5% poids. De manière avantageuse, on peut utiliser des particules ayant des granulométries différentes pour un même lit, ou bien utiliser des particules ayant des granulométries différentes d'un lit à un autre dans le cas où le milieu granulaire est formé par une pluralité de lits étagés. Avantageusement, dans le cas où le milieu granulaire est formé par une pluralité de lits étagés, les lits peuvent être constitués de particules ayant des granulométries décroissantes le long la direction du flux de l'effluent liquide (c'est-à-dire du haut vers le bas), de manière à permettre une filtration d'abord des plus grosses fibres, puis des fibres de plus en plus fines. Cette mise en oeuvre est particulièrement indiquée dans le cas où la rétention des particules colloïdales de très petites tailles contenues dans l'effluent liquide est souhaitée. Ces particules colloïdales peuvent par exemple être formées à partir de pigments et d'additifs contenus dans les textiles et les constituants des lessives. La captation de ces particules colloïdales est particulièrement indiquée dans le dernier lit de l'enceinte suivant la direction du flux de l'effluent liquide. Ce dernier lit suivant la direction de l'effluent liquide, qui peut être qualifié de lit de finition, peut éventuellement ne pas être relié à des moyens de régénération et faire l'objet d'un remplacement périodique.

De manière générale, la masse volumique des particules constituant un lit de particules affecte la fluidisation des particules pendant la régénération (vitesse minimale permettant de fluidiser le lit et perte de charge à travers le lit). Les matériaux décrits ci-dessus pour constituer des particules (par exemple du sable, du verre, de la zéolithe) ont en général des masses volumiques de grain comprises entre 1100 et 2800 kg/m² adaptées à une régénération par exemple par aspiration gazeuse, même lorsque le débit d'aspiration est modéré (par exemple avec un aspirateur domestique). Avantageusement, on peut utiliser des matériaux creux tels que les billes de verre ou de plastique creuses, dont la masse volumique de grain peut être plus faible, ce qui permet alors de régénérer le lit avec des débits de fluide plus faibles.

De manière générale, la vitesse de passage de l'effluent liquide dans un lit de particules influe d'une part sur la qualité avec laquelle la rétention des fibres est réalisée et d'autre part sur la perte de charge de l'effluent liquide à travers le lit de particules. Avantageusement, le système selon l'invention peut être dimensionné pour que la vitesse filtration (vitesse superficielle de l'effluent liquide dans le lit de particules) soit comprise entre 1 et 100m/h, préférentiellement comprise entre 5 et 50 m/h. De préférence, le système selon l'invention peut être dimensionné pour que la perte de charge offerte par le lit de particules propre (c'est-à-dire avant toute filtration ou après régénération) soit comprise entre 500 et 100000 Pa, de préférence comprise entre 1000 et 10000 Pa. Il est possible de calculer la perte de charge à l'écoulement lors du passage de l'effluent liquide dans le lit de particules (lors du premier usage ou après régénération) en utilisant des corrélations décrites par exemple dans le document (S. Rhode, « Opération polyphasique en génie des procédés », Ellipses Edition, 2019).

Selon une mise en oeuvre de l'invention, on peut déterminer une vitesse de filtration de l'effluent liquide et une perte de charge appropriées au moyen d'un dimensionnement bien connu du spécialiste, réalisé au moins en fonction de la quantité d'effluent liquide à filtrer pendant un temps donné, de la pression au refoulement de la vidange du dispositif de traitement de textiles et du positionnement du système selon l'invention sur la portion de la conduite pour la vidange du dispositif de traitement de textiles (notamment le positionnement du système de filtration selon l'invention par rapport au refoulement de la vidange du dispositif de traitement de textiles et par rapport au système d'évacuation des eaux usées auquel le système de filtration selon l'invention est raccordé lorsqu'il est en service).

De manière générale, le débit de l'effluent liquide à filtrer dépend de la capacité de lavage du dispositif de traitement de textiles. Par exemple, si le dispositif de traitement de textiles comporte plusieurs machines à laver, le débit de l'effluent liquide à filtrer dépend du nombre de machines à laver et de la capacité de lavage (par exemple donnée en nombre de kg de linge) de chaque machine à laver. Selon une mise en oeuvre de l'invention, pour une machine à laver à usage domestique, apte à laver entre 5 à 10 kg de linge, on peut dimensionner le système selon l'invention de manière à avoir des débits de filtration compris entre 1 et 25 I/min, préférentiellement compris entre 3 et 15 I/min. Le débit de filtration est fonction de la surface de filtration et de la vitesse de filtration décrite ci-dessus.

Selon une mise en oeuvre de l'invention selon laquelle un seul lit de particules est disposé dans l'enceinte du système selon l'invention et pour une machine à laver lavant entre 5 à 10 kg de linge, le diamètre de l'enceinte peut varier entre 5 et 50 cm de diamètre intérieur, préférentiellement entre 10 et 30 cm de diamètre intérieur pour avoir des vitesse de filtration optimales tel que défini ci-dessus. Avantageusement, la hauteur d'un lit de particules peut être comprise entre 0.5 et 5 fois le diamètre équivalent de la section de passage du lit de particules, préférentiellement comprise entre 0.7 et 2 fois le diamètre équivalent de la section de passage du lit de particules, ce qui permet laisser le temps au microfibres de se déposer dans la porosité du lit.

Selon une autre mise en oeuvre de l'invention selon laquelle l'enceinte est de forme parallélépipédique, le système de filtration peut être disposé à l'arrière ou sur le côté de la machine à laver. Cette forme parallélépipédique est en effet particulièrement adaptée pour placer le système selon l'invention à l'extérieur d'une machine à laver le linge, car il peut ainsi plus facilement s'insérer dans l'espace disponible autour de la machine à laver. Le système de filtration peut de préférence reposer sur le sol, ou être fixé sur un mur ou sur un élément de la machine à laver. Avantageusement, les dimensions de l'enceinte sont choisies de préférence de manière à ne pas dépasser la hauteur et la largeur de la machine à laver si le système selon l'invention est positionné à l'arrière de la machine à laver, et de manière à ne pas dépasser la hauteur et la profondeur de la machine à laver si le système selon l'invention est positionné sur un côté de la machine à laver. De préférence, dans le cas d'une machine à laver lavant entre 5 et 10 kg de linge, la hauteur de l'enceinte peut être inférieure à 85 cm, sa largeur peut être de préférence inférieure à 60 cm, et son épaisseur peut être de préférence inférieure à 20 cm, de manière plus préférée inférieure à 15 cm et de manière encore plus préférée inférieure à 10 cm.

Très préférentiellement, le système selon l'invention peut être raccordé, via les moyens de connexion selon l'invention, à des moyens de régénération du lit de particules sous la forme de moyens d'aspiration gazeuse et/ou de moyens d'insufflation gazeuse.

Des moyens d'aspiration gazeuse permettent l'évacuation des particules accumulées sur et dans le lit de filtration, grâce à une aspiration gazeuse opérée à travers au moins une ouverture située dans la partie supérieure de l'enceinte, au-dessus du milieu granulaire, au niveau du volume libre surmontant le lit de particules. Sous l'effet du débit d'aspiration, un mouvement gazeux de convection ascendant est généré dans le lit de particules. Les particules du lit de filtration sont mises en mouvement et fluidisées, sans être entrainées avec le courant gazeux. Les fibres plus petites que les particules constituant le lit de filtration sont entrainées avec le débit ascendant. De manière très préférée, le gaz des moyens d'aspiration gazeuse est de l'air, ce qui permet d'utiliser des moyens d'aspiration classiques (tels qu'un aspirateur à usage domestique ou industriel), sans nécessiter de moyens pour stocker le gaz ou de moyens d'admission du gaz autre qu'une simple ligne d'évent. Avantageusement, les moyens d'aspiration gazeuse comprennent ou peuvent être complétés par un système de séparation de particules, disposé en aval des moyens d'aspiration gazeuse, tel qu'une chambre cyclonique ou un filtre à membrane, pour collecter les particules de microfibres. A noter que les aspirateurs à usage domestique comprennent généralement de tels systèmes de séparations de particules. L'espace vide au-dessus du milieu granulaire, qui sert de zone d'accumulation pendant la phase de filtration, permet, pendant une phase de régénération du lit, de contenir l'expansion du lit associée à la fluidisation du lit. A l'issue de la phase de régénération du lit, le débit d'aspiration est stoppé et les particules sédimentent pour reformer à nouveau un lit filtrant exempt des fibres déposées pendant les phases de filtration préalables. Avantageusement, les fibres collectées pendant une phase de régénération peuvent être soit utilisées comme matériau de recyclage, soit disposées comme un déchet non dangereux dans des systèmes de collecte appropriés.

De manière générale, la vitesse du gaz ascendant pendant la régénération du lit de particules détermine la mise en agitation du milieu granulaire. Il est bien connu de l'homme du métier que pour mettre en mouvement un lit de particules, il faut que le gaz monte à travers le lit granulaire avec une vitesse d'écoulement supérieure à une vitesse appelée "vitesse minimum de fluidisation", qui peut être calculée grâce à des corrélations bien connues de l'homme du métier (par exemple, comme décrit dans le document (Wen C.H. & Yu Y.H., Chem. Eng. Prog. Symp. Series, 82, 100-111 (1966)) et dont la valeur dépend des propriétés du milieu granulaire (taille des particules, masse volumique). De manière préférée, pendant la régénération, le lit de particules est fluidisé par un mouvement d'air ascendant, à une vitesse traversant le lit correspondant préférentiellement à une vitesse comprise entre 2 et 20 fois la valeur de la vitesse minimum de fluidisation, afin de favoriser l'agitation des particules du lit, et de provoquer ainsi l'envol des microfibres collectées qui sortent du lit. Très préférentiellement, la vitesse de l'air ascendant au travers du lit peut être comprise entre 3 à 10 fois la vitesse minimum de fluidisation. Dans le cas d'un lave-linge à usage domestique lavant entre 5 à 10 kg de linge, cette gamme de vitesses du gaz ascendant permet en effet d'assurer la fluidisation, sans nécessiter de moyens d'aspiration spécifiques. Autrement dit, cette gamme de vitesses du gaz ascendant est en général compatible avec les caractéristiques de la majorité des aspirateurs commerciaux disponibles à un usage domestique.

De manière générale, le débit d'aspiration à travers le milieu filtrant dépend de la capacité de lavage du dispositif de traitement de textiles. Par exemple, si le dispositif de traitement de textiles comporte plusieurs machines à laver, le débit d'aspiration à travers le milieu filtrant dépend du nombre de machines à laver et de la capacité de lavage (par exemple donnée en nombre de kg de linge) de chaque machine à laver. La section de passage du lit de filtration augmente si la quantité d'effluent liquide à filtrer augmente. Le débit à l'aspiration doit alors être adapté pour permettre la fluidisation du milieu. La hauteur du lit fluidisé créée une perte de charge correspondant au poids du lit qui doit être aussi compatible avec les caractéristiques des moyens de régénération par aspiration.

Pour une simple machine à laver domestique ayant une capacité de lavage de 5 à 10 kg de linge, on peut dimensionner le système de manière à avoir des débits d'aspiration voisins de 10 à 100l/s, préférentiellement compris entre 20 et 40 l/s, permettant de générer un vide à l'aspiration compris entre 5 et 50 kPa, préférentiellement compris entre 20 et 40 kPa. Ces caractéristiques sont compatibles avec les caractéristiques de la majorité des aspirateurs commerciaux disponibles à l'usage domestique. Dans le cas où le système selon l'invention est installé en aval de laveries industrielles ou en aval d'un ensemble de lave-linges, un système d'aspiration spécifique, caractérisé par des débits et une vitesse d'aspiration plus élevés, peut être préféré.

Selon une mise en oeuvre de l'invention selon laquelle un gaz différent de l'air est utilisé pour les moyens de régénération par fluidisation du milieu granulaire par aspiration gazeuse, les moyens de connexion aux moyens de régénération par fluidisation du milieu granulaire peuvent comprendre en outre une ouverture supplémentaire, disposée dans la partie inférieure de l'enceinte, sous le support du milieu granulaire, et pouvant être connectée à des moyens pour une admission du gaz utilisé pour la régénération.

Selon une mise en oeuvre de l'invention selon laquelle des moyens d'aspiration gazeuse sont utilisés pour régénérer le milieu granulaire et pour lesquels le gaz utilisé est de l'air, et en cas d'étanchéité totale du raccordement entre les moyens d'évacuation de l'effluent liquide et un système d'évacuation des eaux usées extérieur au système selon l'invention, les moyens de connexion aux moyens d'aspiration gazeuse peuvent comprendre une ouverture supplémentaire disposée dans la partie inférieure de l'enceinte, sous le support du milieu granulaire. Cette ouverture supplémentaire peut être raccordée à une ligne d'évent. Une telle ouverture supplémentaire n'est pas nécessaire lorsque le raccordement entre les moyens d'évacuation de l'effluent liquide et un système d'évacuation des eaux usées extérieur au système selon l'invention n'est pas étanche à l'air, par exemple lorsque le raccordement s'effectue à travers un siphon ouvert. En effet, dans ce cas, l'aspiration pourra s'effectuer directement à travers l'ouverture des moyens d'évacuation de l'effluent liquide, sans qu'on ait besoin d'une ligne d'évent. Avantageusement, le système pour la filtration de microfibres peut comprendre en outre un distributeur de gaz, disposé entre le milieu granulaire et l'ouverture permettant l'admission du gaz des moyens d'aspiration gazeuse (c'est-à-dire soit l'ouverture supplémentaire décrite ci-dessus, ou l'ouverture des moyens d'évacuation de l'effluent liquide). Un distributeur de gaz permet une distribution homogène d'un gaz. Selon une mise en oeuvre de l'invention, le distributeur de gaz peut être une plaque perforée. Avantageusement, les orifices de la plaque perforée sont dimensionnés de manière à ce que la perte de charge engendrée lors du passage du gaz au travers des orifices conduise à une répartition uniforme du gaz en sortie du distributeur. Selon une autre variante de mise en oeuvre de l'invention, le système selon l'invention peut être raccordé, via les moyens de connexion selon l'invention, à des moyens de régénération du lit de particules sous la forme de moyens d'insufflation gazeuse, tels que des moyens de surpression ou de compression d'air. Selon cette conception, les moyens de connexion aux moyens de régénération par fluidisation du milieu granulaire peuvent comprendre en outre une ouverture supplémentaire, disposée dans la partie inférieure de l'enceinte, sous le support du milieu granulaire, et pouvant être connectée à des moyens pour l'insufflation gazeuse. De cette manière, un gaz est introduit dans la partie inférieure de l'enceinte, sous le milieu granulaire, à une pression supérieure à la pression dans le système de filtration, ce qui génère un flux de gaz ascendant au travers du milieu granulaire. Les particules du lit ainsi mises en mouvement libèrent les microfibres retenues dans le milieu granulaire, qui peuvent alors être évacuées par l'ouverture des moyens de connexion aux moyens de régénération par fluidisation du milieu granulaire située dans la partie supérieure de l'enceinte déjà décrite ci-dessus.

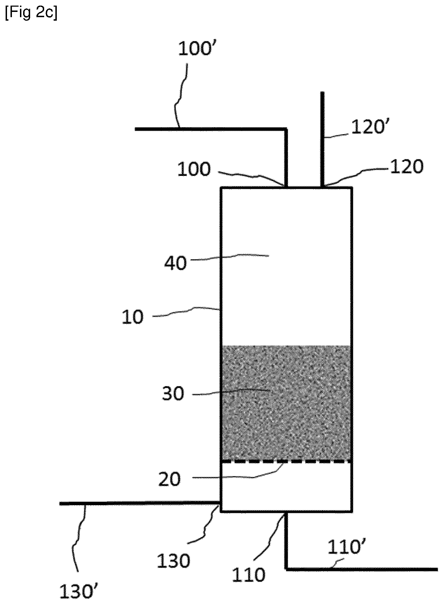

La figure 2c présente une variante du mode de réalisation de la figure 1, en tout point identique à ce premier mode de réalisation (ainsi, les éléments communs ne seront pas décrits à nouveau), et dans lequel, les moyens de connexion aux moyens de régénération par fluidisation dudit milieu granulaire comprennent en outre une ouverture supplémentaire 130 disposée dans la partie inférieure de l'enceinte, sous le support 20 du milieu granulaire 30, et pouvant être connectée, via la conduite 130', à des moyens (non représentés) pour une insufflation gazeuse et/ou une admission gazeuse. Dans le cas de moyens d'insufflation gazeuse, un compresseur d'air (non représenté) situé en amont de la conduite 130' peut permettre d'introduire l'air à une pression supérieure à la pression dans le milieu granulaire 30, et l'air traversant le milieu granulaire 130 peut sortir par l'ouverture 120. La conduite 130' peut alternativement constituer une conduite d'admission du gaz d'aspiration, telle qu'une ligne d'évent dans le cas de moyens d'aspiration gazeuse dans lequel le gaz de régénération est de l'air. L'ouverture supplémentaire 130 ou la conduite 130' comprennent préférentiellement un clapet anti-retour (non représenté).

Avantageusement, le système selon l'invention peut comprendre en outre des moyens pour accélérer la filtration, en réalisant une aspiration de l'effluent liquide filtré (c'est-à-dire après son passage au travers du milieu granulaire), disposés en aval du milieu granulaire. Ces moyens pour créer une aspiration de l'effluent liquide à travers le milieu granulaire peuvent comprendre une première conduite raccordée à une ouverture supplémentaire aménagée dans une partie de l'enceinte située sous le milieu granulaire, la première conduite étant raccordée à une deuxième conduite dans laquelle de l'eau peut être en circulation au moment de la filtration, cette deuxième conduite comprenant une portion de diamètre inférieur pour créer une aspiration par effet venturi dans la première conduite. Cette deuxième conduite dans laquelle de l'eau peut être en circulation peut par exemple être la conduite de remplissage d'eau d'un lave-linge. En effet, dans le cas d'un lave-linge équipé du système selon l'invention, la phase de vidange a une durée moins longue que la phase de filtration de l'effluent liquide au travers du milieu granulaire. Ainsi, lorsque le lave-linge passe au cycle suivant (un lavage de textiles comprend plusieurs cycles de lavage/rinçage), à la fin d'un cycle de vidange, le lave-linge se remplit d'eau à nouveau alors que la phase de filtration est toujours en cours : on peut alors utiliser l'étape de remplissage d'eau du lave-linge pour créer un effet aspirant par venturi, afin d'accélérer cette filtration. Les moyens pour accélérer la filtration peuvent aussi comprendre un aspirateur, une trompe à eau, ou encore une pompe à vide disposés le long d'une conduite supplémentaire disposée en aval du milieu granulaire.

De manière avantageuse, les moyens d'évacuation de l'effluent liquide du système selon l'invention comprennent en outre un circuit externe à l'enceinte, raccordé à ladite enceinte, pour court-circuiter le milieu granulaire en cas d'accumulation de l'effluent liquide dans le volume libre de l'enceinte, au-dessus du milieu granulaire. Autrement dit, selon cette conception, une partie de l'effluent liquide qui peut s'être accumulée au-dessus du milieu granulaire (en cas de trop fort débit de l'effluent liquide par rapport au débit de filtration du milieu granulaire et/ou en cas de colmatage du milieu granulaire) est évacuée par ce court-circuit externe à l'enceinte, afin d'éviter un refoulement de l'effluent liquide par les ouvertures situées dans la partie supérieure de l'enceinte. De manière avantageuse, le raccordement de ce court-circuit externe comprend une ouverture au-dessus du milieu granulaire, par laquelle une partie de l'effluent liquide (au-dessus du niveau de l'ouverture) peut s'évacuer, et une ouverture en-dessous du milieu granulaire, de manière à ce que cette partie de l'effluent liquide soit évacuée du système selon l'invention par l'ouverture située dans la partie inférieure de l'enceinte, sous le milieu granulaire. Avantageusement et tel que cela sera décrit plus bas, cette conduite de court-circuit externe peut être également équipée d'un d'une vanne 2 voies ou d'un clapet anti-retour, permettant d'empêcher les remontées de gaz dans le sens vertical ascendant pendant une phase de régénération du milieu granulaire. De préférence, l'ouverture de ce court-circuit externe située au-dessus du milieu granulaire peut être avantageusement située au-dessus de tout dispositif permettant de modifier la répartition du flux de l'effluent liquide, telle qu'une grille, un brise jet ou de manière plus générale, un distributeur de liquide.

Alternativement, les moyens d'évacuation de l'effluent liquide du système selon l'invention comprennent en outre une conduite traversant au moins le milieu granulaire pour permettre l'évacuation d'une accumulation de l'effluent liquide dans le volume libre de l'enceinte au-dessus du milieu granulaire. Autrement dit, selon cette conception, une partie de l'effluent liquide qui peut s'être accumulée au-dessus du milieu granulaire (en cas de trop fort débit de l'effluent liquide par rapport au débit de filtration du milieu granulaire et/ou en cas de colmatage du milieu granulaire) pénètre par une ouverture de cette conduite située au-dessus du milieu granulaire et est évacuée par une ouverture de cette conduite située en-dessous du milieu granulaire. Cette conduite, qui agit comme un court-circuit interne, permet d'éviter un refoulement de l'effluent liquide par les ouvertures situées dans la partie supérieure de l'enceinte. Préférentiellement, la conduite selon cette conception est préférentiellement munie d'un déflecteur dans sa partie supérieure, pour empêcher l'effluent liquide entrant par la partie supérieure de l'enceinte de pénétrer directement dans cette conduite. Avantageusement et tel que cela sera décrit plus bas, cette conduite de court-circuit interne peut être également équipée d'un clapet anti-retour, permettant d'éviter les remontées de gaz dans le court-circuit dans le sens vertical ascendant pendant une phase de régénération du milieu granulaire.

Selon une mise oeuvre, les court-circuits interne et/ou externe tels que décrits ci-dessus peuvent comprendre un détecteur de liquide, de préférence relié à une alarme. Un tel détecteur permet de détecter la présence d'eau circulant dans le court-circuit, ce qui peut être un indicateur qu'il est recommandé de procéder à une phase de régénération du milieu granulaire puisqu'au moins une partie de l'effluent liquide n'est plus filtré par le système selon l'invention. Ce détecteur de liquide peut par exemple être constitué de deux branches en métal séparées de quelques millimètres, positionnées à l'intérieur d'une conduite d'un court-circuit, et alimentées en électricité (par exemple au moyen d'une batterie, d'une pile ou d'une connexion à un réseau électrique). Lorsque l'eau passe entre les deux branches, le courant électrique s'établit et peut déclencher une alarme, par exemple lumineuse et/ou sonore. Le signal lumineux peut être avantageusement maintenu dans le temps, c'est-à-dire même après le passage de l'eau dans la conduite de court-circuit, afin d'alerter l'utilisateur s'il n'était pas présent au moment du déclenchement de l'alarme.

Très préférentiellement, le système selon l'invention comprend en outre une chambre située en amont de l'enceinte, et raccordée à l'enceinte par les moyens pour le passage par percolation de l'effluent liquide au travers du milieu granulaire, cette chambre servant de réservoir pour une accumulation de l'effluent liquide pendant la vidange. Ce réservoir d'accumulation permet de temporiser la filtration, en diminuant la vitesse de filtration de l'effluent liquide au travers du milieu granulaire, en fonction des conditions d'opérations ou en fonction du colmatage. Ce réservoir d'accumulation de l'effluent liquide, en amont de l'enceinte sur le trajet de l'effluent liquide, peut permettre d'utiliser une enceinte du système selon l'invention moins volumineuse, le volume libre de l'enceinte au-dessus du milieu granulaire devant alors être essentiellement dimensionné pour permettre la fluidisation du milieu granulaire lors de la phase de régénération. De plus, cette chambre d'accumulation de l'effluent liquide peut avoir une forme quelconque et être disposée à tout emplacement sur la conduite de vidange d'un dispositif de traitement de textiles, si bien qu'elle peut être disposée au niveau de tout espace disponible du dispositif de traitement de textiles tant que cet espace disponible est sensiblement situé au-dessus du l'enceinte et permet au liquide de s'écouler de manière gravitaire.

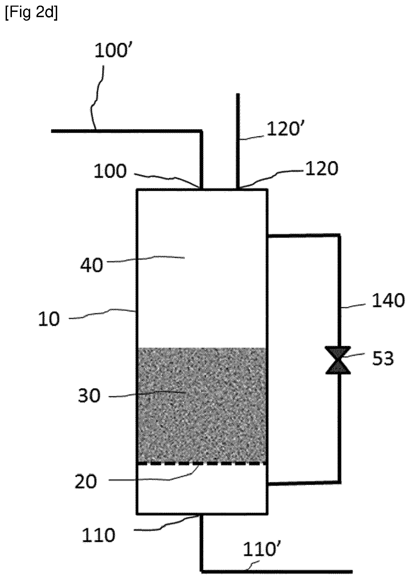

La figure 2d présente une variante du mode de réalisation de la figure 1, en tout point identique à ce premier mode (ainsi, les éléments communs ne seront pas décrits à nouveau), à l'exception d'un court-circuit externe 140, sous forme d'une conduite externe à l'enceinte 10, faisant partie des moyens d'évacuation de l'effluent liquide du système selon l'invention. Selon cette variante, le court-circuit externe 140 relie la partie supérieure du volume libre 40 de l'enceinte 10 à la partie inférieure de l'enceinte 10 située sous le support 20 du milieu granulaire 30. Cela permet d'éviter un refoulement de l'effluent liquide par les deux ouvertures 100, 120 situées dans la partie supérieure de l'enceinte. Pour cette variante, une vanne 2 voies 53 est disposée sur la canalisation 140 pour empêcher les remontées de gaz dans le sens vertical ascendant pendant une phase de régénération du milieu granulaire. La vanne deux voies 53 peut être remplacée avantageusement par un clapet anti-retour (non représenté).

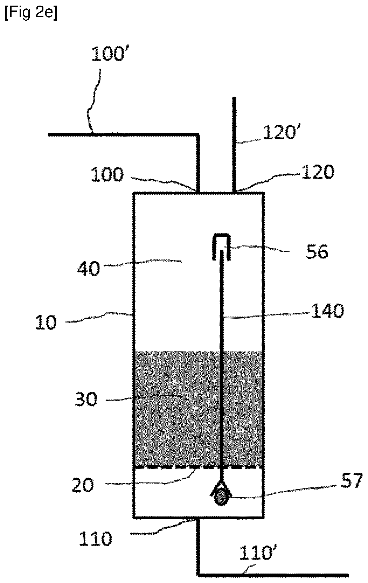

La figure 2e présente une variante du mode de réalisation de la figure 1, en tout point identique à ce premier mode (ainsi, les éléments communs ne seront pas décrits à nouveau), à l'exception d'un court-circuit interne 140 à l'enceinte, sous forme d'une conduite interne, faisant partie des moyens d'évacuation de l'effluent liquide du système selon l'invention. Selon cette variante, le court-circuit interne 140 comprend une conduite reliant directement la partie supérieure du volume libre 40 de l'enceinte 10 à la partie inférieure de l'enceinte située sous le support 20 du milieu granulaire 30. Cela permet d'éviter un refoulement de l'effluent liquide par les deux ouvertures 100, 120 situées dans la partie supérieure de l'enceinte. Pour cette variante, le circuit interne est surmonté d'un déflecteur 56 pour empêcher l'effluent liquide entrant par l'ouverture 100 de pénétrer directement dans le court-circuit interne 140. Egalement, le circuit interne 140 selon cette variante est muni d'un clapet anti-retour 57 évitant les remontées de gaz dans la conduite 140 dans le sens vertical ascendant pendant une phase de régénération du milieu granulaire.

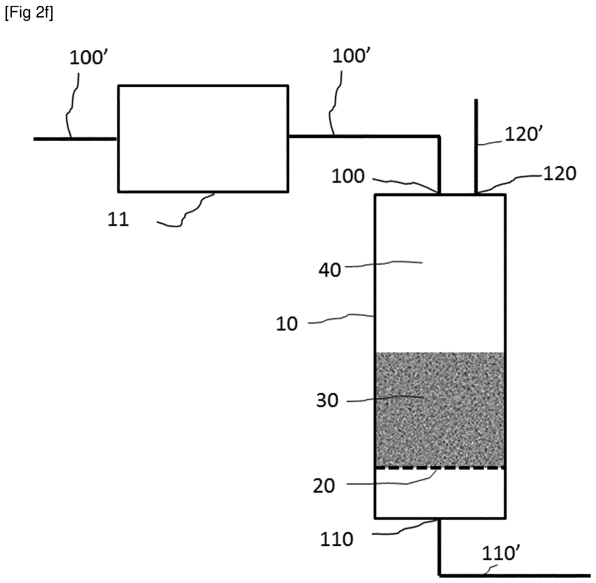

La figure 2f présente une variante du mode de réalisation de la figure 1, en tout point identique à ce premier mode (ainsi, les éléments communs ne seront pas décrits à nouveau), à l'exception d'une chambre supplémentaire 11, disposée en amont de l'enceinte 10, le long de la conduite de vidange 100' aboutissant à l'ouverture 100 des moyens pour le passage par percolation de l'effluent liquide au travers du milieu granulaire 30. Cette chambre 11 contribue à temporiser la filtration, en diminuant la vitesse de filtration de l'effluent liquide au travers du milieu granulaire 30, en fonction des conditions d'opérations ou en fonction du colmatage. Cela permet d'éviter un refoulement de l'effluent liquide par les deux ouvertures 100, 120 situées dans la partie supérieure de l'enceinte 10 si le débit de dans le lit de filtration est plus faible que le débit de vidange. L'écoulement entre la chambre 11 et l'enceinte 10 s'effectuant principalement par gravité, la chambre 11 étant située sensiblement au-dessus de l'enceinte 10.

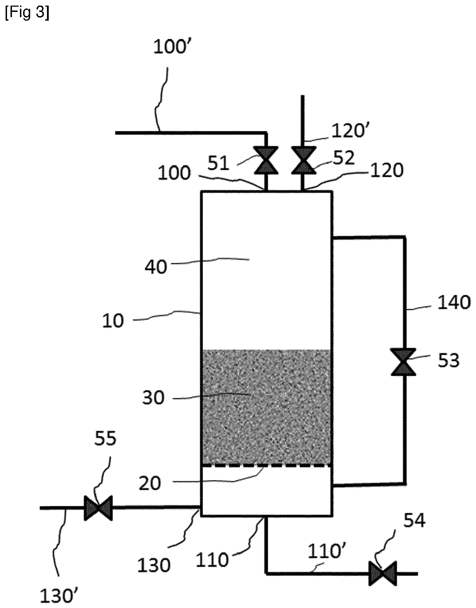

Selon un mode de réalisation, le système selon l'invention comprend en outre des moyens de contrôle des moyens de passage par percolation de l'effluent liquide au travers du milieu granulaire et/ou desdits moyens d'évacuation de l'effluent liquide, et/ou des moyens de connexion auxdits moyens de régénération par fluidisation dudit milieu granulaire. Ces moyens de contrôle peuvent comprendre des vannes 2 voies, des vannes 3 voies, des vannes 6 voies rotatives, et/ou des clapets anti-retour. De tels moyens de contrôle permettent de contrôler les deux phases du procédé selon l'invention : 1) pendant la phase de filtration, seul l'effluent liquide peut entrer et sortir de l'enceinte, et uniquement via les moyens pour le passage par percolation de l'effluent liquide au travers du milieu granulaire et les moyens d'évacuation de l'effluent liquide ; 2) pendant la phase de régénération, seul le gaz des moyens de régénération par fluidisation du milieu granulaire peut circuler dans l'enceinte. Des combinaisons de ces moyens de contrôle sont bien sûr possibles. Différentes configurations, non limitatives et non exhaustives, sont présentées dans les figures 3 à 7b.

La figure 3 illustre, de manière schématique et non limitative, un mode de réalisation de l'invention, comprenant un court-circuit externe 140 (tel que décrit à la figure 2d) et des moyens de connexion aux moyens de régénération par fluidisation dudit milieu granulaire supplémentaires 130, 130' (tels que décrits à la figure 2c), et comprenant des vannes 2 voies 51, 52, 53, 54, 55 placées sur chacune des conduites 100', 110', 120', 130' raccordées respectivement aux ouvertures 100, 110, 120, 130 de l'enceinte, et sur le court-circuit externe 140. Les vannes 51, 52, 54, 55 permettent d'ouvrir ou de fermer les ouvertures respectivement 100, 110, 120, 130 pendant les phases de filtration ou de régénération. Pendant la phase de régénération, le gaz est empêché de circuler dans le court-circuit externe 140 grâce à la vanne 53 installée sur le court-circuit. La vanne deux voies 53 peut être remplacée avantageusement par un clapet anti-retour (non représenté).

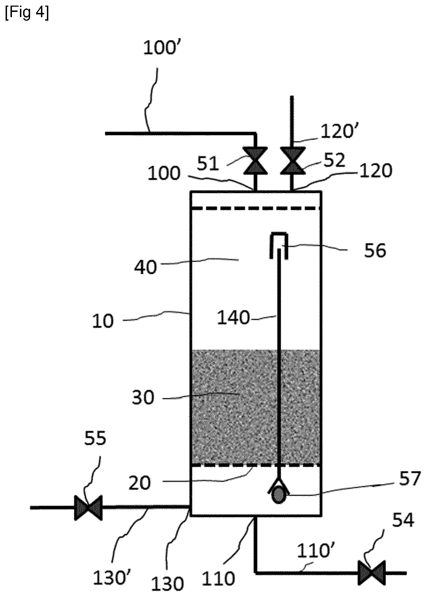

La figure 4 illustre, de manière schématique et non limitative, un mode de réalisation de l'invention, comprenant un court-circuit interne 140 (tel que décrit à la figure 2e) et des moyens de connexion aux moyens de régénération par fluidisation dudit milieu granulaire supplémentaires 130, 130' (tels que décrits à la figure 2c), dans lequel des vannes 2 voies 51, 52, 54, 55 sont placées sur chacune des conduites 100', 110', 120', 130' raccordées respectivement aux ouvertures 100, 110, 120, 130 de l'enceinte, et un clapet anti-retour 57 est disposé à la base de la conduite du court-circuit interne 140. Les vannes 51, 52, 54 55 permettent d'ouvrir ou de fermer les ouvertures respectivement 100, 110, 120, 130 pendant les phases de filtration ou de régénération. Le clapet anti-retour 57 permet d'éviter les remontées de gaz dans la conduite 140 dans le sens vertical ascendant pendant une phase de régénération du milieu granulaire 30.

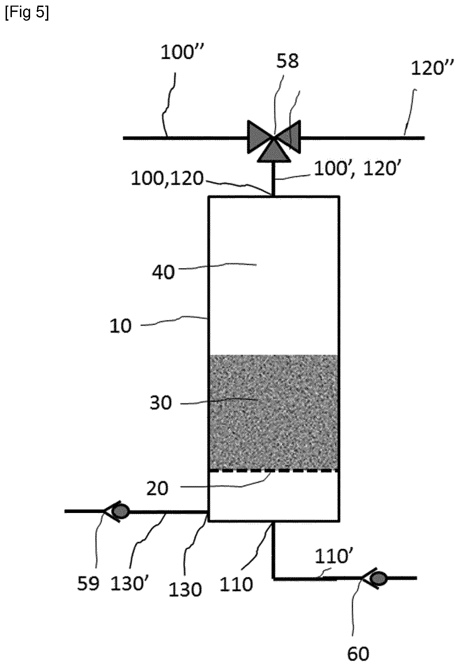

La figure 5 illustre, de manière schématique et non limitative, un mode de réalisation de l'invention, comprenant des moyens de connexion aux moyens de régénération par fluidisation dudit milieu granulaire supplémentaires 130, 130' (tels que décrits à la figure 2c), et dans lequel les ouvertures 100, 120 des moyens de passage par percolation de l'effluent liquide au travers du milieu granulaire 30 et des moyens de connexion aux moyens de régénération par fluidisation du milieu granulaire sont communes, et dans lequel une vanne 3 voies 58 est disposée à la jonction des conduites 100', 120', 120" et 130" pour contrôler le fluide passant dans ces conduites 100', 120', 120", 130", en fonction de la phase en cours du procédé selon l'invention, c'est-à-dire pour permettre uniquement le passage de l'effluent liquide dans les éléments 100, 100' et 100" lors de la phase de filtration, et uniquement le passage du gaz dans les éléments 120, 120', 120" lors de la phase de régénération. Selon ce mode de réalisation non limitatif, des clapets anti-retour 59, 60 sont également disposés sur chacune des conduites 110', 130' raccordées respectivement aux ouvertures 110, 130 de la partie inférieure de l'enceinte 10, de manière à ne permettre l'évacuation de l'effluent liquide qu'uniquement par l'ouverture 110, et l'admission ou l'insufflation de gaz qu'uniquement par l'ouverture 130.

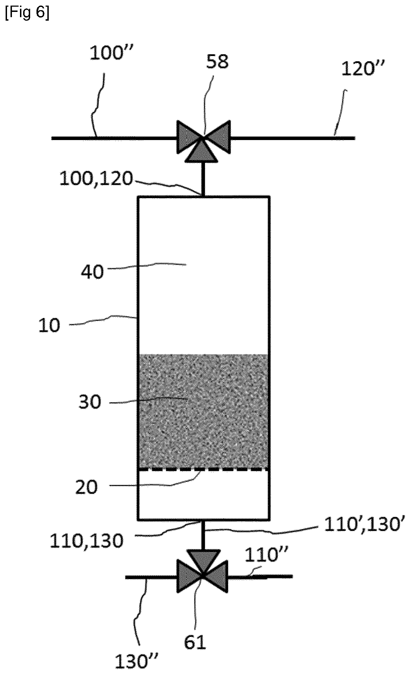

La figure 6 illustre, de manière schématique et non limitative, une variante de la figure 5, dans laquelle les ouvertures 110, 130 des moyens d'évacuation de l'effluent liquide et des moyens de connexion aux moyens de régénération par fluidisation du milieu granulaire sont également communes, et dans laquelle une vanne 3 voies 61 est disposée à la jonction des conduites 110', 130', 110", 130" pour contrôler le fluide passant dans ces conduites 110', 130', 110", 130", en fonction de la phase en cours du procédé selon l'invention. Ainsi, dans cette variante, l'utilisation des vannes 3 voies 58, 61 permettent d'utiliser le système selon l'invention en phase de filtration ou bien en phase de régénération. Plus précisément, en phase filtration, la vanne 58 ouvre l'ouverture 100 et ferme l'ouverture 120, et la vanne 61 ouvre l'ouverture 110 et ferme l'ouverture 130. En phase de régénération, la vanne 58 ouvre l'ouverture 120 et ferme l'ouverture 100, et la vanne 61 ouvre l'ouverture 130 et ferme l'ouverture 110. De cette manière, le passage de l'effluent liquide est uniquement possible lors de la phase de filtration, et uniquement dans les éléments 100, 100', 100", 110, 110' 110", et le passage du gaz est uniquement possible lors de la phase de régénération, et uniquement dans les éléments 120, 120', 120", 130, 130", 130".

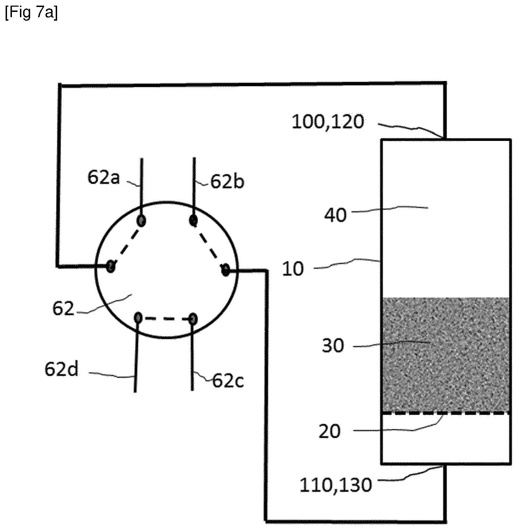

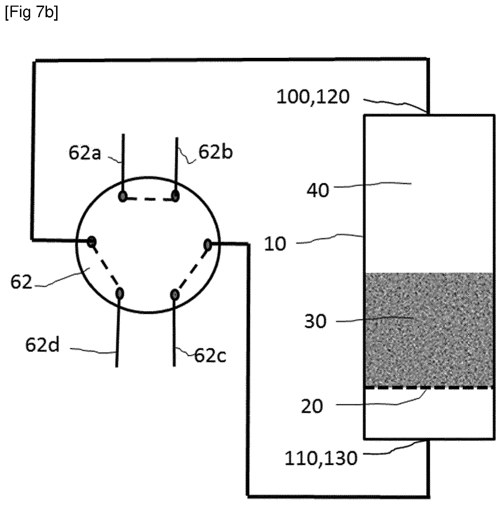

Les figures 7a et 7b illustrent, de manière schématique et non limitative, un mode de mise en oeuvre de l'invention, dans lequel les moyens de contrôle des moyens de passage par percolation de l'effluent liquide au travers du milieu granulaire, les moyens d'évacuation de l'effluent liquide, et les moyens de connexion aux moyens de régénération par de fluidisation sont contrôlés par une vanne 6 voies rotative 62. Pour ce mode de réalisation, les ouvertures 100, 120 des moyens de passage par percolation de l'effluent liquide au travers du milieu granulaire et des moyens de connexion aux moyens de régénération par fluidisation du milieu granulaire sont communes, ainsi que les ouvertures 110, 130 des moyens d'évacuation de l'effluent liquide et des moyens de connexion aux moyens de régénération par fluidisation du milieu granulaire. La figure 7a illustre de manière schématique, par des lignes en pointillés, les positions des éléments 62a, 62b, 62c, et 62d de la vanne 6 voies 62, pour connecter, lors de la phase de filtration, uniquement l'ouverture 100 à l'ouverture 110. La figure 7b illustre de manière schématique, par des lignes en pointillés, les positions des éléments 62a, 62b, 62c, et 62d de la vanne 6 voies 62 pour connecter, lors de la phase de régénération, uniquement l'ouverture 130 à l'ouverture 120.

Avantageusement, le système selon l'invention peut comprendre en outre une chambre de décantation et/ou une chambre de séparation cyclonique (tel qu'un hydrocyclone), disposées en amont de l'enceinte, et raccordées à l'enceinte par les moyens pour le passage par percolation de l'effluent liquide au travers du milieu granulaire. Une chambre de décantation permet la sédimentation par gravité des fibres les plus grosses. Une chambre de séparation cyclonique (tel qu'un hydrocyclone) permet de séparer les plus grosses fibres en induisant une vorticité et un champs de force centrifuge favorisant la séparation. De telles chambre, positionnés en amont de l'enceinte par rapport au flux de l'effluent liquide, peuvent permettre de capter les plus grosses fibres et de limiter le colmatage trop rapide du milieu granulaire, qui pourra alors capter plus efficacement la majorité des plus petites fibres.

Préférentiellement, le système selon l'invention comprend en outre des moyens d'injection d'au moins un agent floculant dans l'effluent liquide, disposés pour une injection de l'agent floculant dans l'effluent liquide avant son arrivée dans le milieu granulaire. Ces moyens d'injection d'au moins un agent floculant dans l'effluent liquide peuvent être soit disposés en amont de l'enceinte et raccordés à l'enceinte par les moyens pour le passage par percolation de l'effluent liquide au travers du milieu granulaire, soit disposés de manière à permettre une injection dans le volume libre au-dessus du milieu granulaire, via une ouverture réalisée dans la partie supérieure de l'enceinte. Dans le cas où l'agent floculant est sous forme liquide, les moyens d'injection d'au moins un agent floculant peuvent comprendre un réservoir comprenant ledit au moins un agent floculant ainsi que des moyens permettant de contrôler le débit de l'agent floculant. Il est également possible, par exemple dans le cas où l'agent floculant est sous forme liquide ou solide, de mélanger l'agent floculant avec le liquide dans le dispositif permettant de traiter le textile, par exemple en mélange avec la lessive dans le cas d'un lave-linge. Un agent floculant permet de favoriser l'agglomération des fibres les plus petites, ce qui facilite leur séparation de l'effluent liquide au passage dans le milieu granulaire. On peut par exemple utiliser un agent floculant sous la forme de sels minéraux à cations polyvalents comme le sulfate d'alumine ou le chlorure ferrique, la silice activée, ou des polyélectrolytes organiques naturels (amidons, alginate) ou de synthèse (polymères de masse moléculaire élevée comme les polycrylamides ou les polyvinylamines). L'injection d'un l'agent floculant est préférentiellement réalisée à une faible teneur, comprise généralement entre 1 et 20 ppm du liquide de vidange, et on utilise de préférence un dispositif favorisant le mélange dudit agent floculant dans l'effluent liquide. La floculation est particulièrement intéressante dans le cas où les microfibres ont des dimensions de l'ordre du micron ou inférieures au micron.

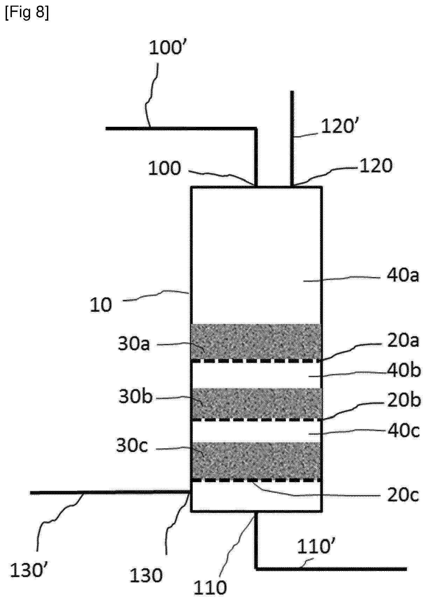

La figure 8 illustre un mode de réalisation du système selon l'invention, comprenant un milieu granulaire formé par trois lits de particules étagés 30a, 30b, 30c, disposés sur trois supports 20a, 20b, et 20c, chaque lit 30a, 30b, 30c étant surmonté par un volume libre 40a, 40b, 40c. L'ouverture 120 aménagée dans la paroi supérieure de l'enceinte 10 est destinée à être raccordée à des moyens de régénération par fluidisation du milieu granulaire (non représentés).

L'invention concerne en outre un procédé pour la filtration de microfibres contenues dans un effluent liquide, qui peut être avantageusement mis en oeuvre au moyen du système pour la filtration de microfibres contenues dans un effluent liquide selon l'un quelconque des modes de réalisation ou l'une quelconque des combinaisons des modes de réalisation décrits ci-dessus.

Le procédé selon l'invention comprend au moins les étapes suivantes :
A) on réalise au moins une phase de filtration des microfibres contenues dans l'effluent liquide, la phase de filtration comprenant au moins le passage de l'effluent liquide au travers du milieu granulaire au moyen au moins des moyens pour le passage de l'effluent liquide au travers du milieu granulaire décrits ci-dessus, et l'évacuation de l'effluent liquide ainsi filtré au moyen des moyens d'évacuation de l'effluent liquide décrits ci-dessus ;
B) on réalise une phase de régénération par fluidisation du milieu granulaire en raccordant les moyens de connexion à des moyens de régénération par fluidisation du milieu granulaire décrits ci-dessus à des moyens de régénération par fluidisation du milieu granulaire, tels que des moyens d'aspiration gazeuse ou des moyens d'insufflation gazeuse.

Avantageusement, on répète l'étape A) entre 20 à 150 fois, de préférence environ 100 fois avant de réaliser l'étape B). En effet, il est important de procéder régulièrement à la régénération du milieu filtrant afin d'éviter un colmatage, mais il peut n'être pas nécessaire de réaliser une phase de régénération systématiquement après chaque phase de filtration, en fonction de la charge en microfibres de l'effluent liquide. On peut par exemple estimer une fréquence de déclenchement de la phase de régénération, en estimant une vitesse de bouchage de la porosité du lit filtrant par accumulation des microfibres, à partir de la concentration en microfibres dans l'effluent liquide à chaque lavage. Ce mode de réalisation, en évitant des phases de régénération systématiques, permet notamment des économies d'énergie.

Préférentiellement, on réalise une phase de régénération par fluidisation du milieu granulaire, après une pluralité de phases de filtration, lorsqu'on détecte que le débit de percolation de l'effluent liquide ralentit. Selon une mise en oeuvre, on peut déclencher une phase de régénération du milieu granulaire de la manière suivante : pour chaque phase de filtration, on mesure la variation du niveau de l'effluent liquide dans le volume libre au-dessus du milieu granulaire en fonction du temps; on compare cette mesure à une valeur de référence du débit de percolation, obtenue par exemple par mesure lorsque le milieu granulaire est exempt de microfibres ; lorsque la mesure est inférieure au moins de 100% à la valeur de référence, ou préférentiellement au moins de 50% à la valeur de référence, on réalise une phase de régénération par fluidisation du milieu granulaire à la fin de la phase de filtration en cours.

Préférentiellement, on peut ne déclencher la phase de régénération par fluidisation du milieu granulaire qu'après une durée prédéterminée, prise à partir de la fin de la dernière phase de filtration, permettant au moins le drainage de l'effluent liquide et de préférence également le séchage du milieu granulaire, et ce, afin d'évacuer toute l'humidité contenue dans le milieu granulaire. Cette durée prédéterminée peut être comprise entre 3 et 7h, de préférence 5h. Selon une mise en oeuvre de l'invention, pour favoriser le séchage, on peut en outre établir une convection naturelle ou forcée de gaz à travers le milieu granulaire, en maintenant ouvertes les ouvertures des moyens d'évacuation de l'effluent liquide et des moyens de connexion aux moyens de régénération par fluidisation du milieu granulaire. La durée prédéterminée sera avantageusement limitée lorsque des particules hydrophobes sont utilisées et/ou le filtre est construit avec un matériau hydrophobe.

Avantageusement, le procédé selon l'invention peut comprendre, préalablement à l'étape b), une phase de drainage du milieu granulaire, réalisée au moyen de moyens d'aspiration gazeuse raccordés au système selon l'invention de manière à générer un flux descendant de gaz au travers du milieu granulaire. Autrement dit, les moyens d'aspiration gazeuse sont raccordés au système selon l'invention au niveau d'une ouverture située sous le milieu granulaire, et de préférence au-dessus de la paroi inférieure de l'enceinte. Selon une mise en oeuvre de l'invention, les moyens d'aspiration gazeuse peuvent être connectés à l'ouverture des moyens d'évacuation de l'effluent liquide, ou alternativement, lorsqu'elle est existante, à l'ouverture supplémentaire des moyens de connexion aux moyens de régénération par fluidisation du milieu granulaire décrite ci-dessus. L'aspiration de gaz par une ouverture située dans la partie inférieure de l'enceinte permet une convection forcée de gaz à travers le milieu granulaire du haut vers le bas. Cette convection forcée de gaz entraine une grande partie du liquide résiduel présent dans les interstices du milieu granulaire, facilitant ainsi son écoulement gravitaire et permettant de réduire l'humidité résiduelle du lit. Dans ces conditions, avec l'aide de la circulation du gaz, il est ainsi possible de réduire la fraction volumique du liquide dans le lit à une teneur inférieure à 10%, voire de sécher intégralement le lit si le temps de cette étape est suffisamment longue. Ainsi, cette circulation d'un gaz permet de faciliter l'écoulement gravitaire de l'effluent liquide piégé dans le milieu granulaire, avant de procéder à la régénération du milieu granulaire. Préférentiellement, l'ouverture à laquelle sont connectés les moyens d'aspiration gazeuse est située à une côte supérieure à la côte de la paroi inférieure de l'enceinte, et comporte un déflecteur pour empêcher l'effluent liquide drainé de pénétrer dans les moyens d'aspiration gazeuse. Avantageusement, le système selon l'invention peut comprendre des moyens de collecte (comme des pièges à eaux) de l'effluent liquide drainé, situés en amont de l'ouverture connectée aux moyens d'aspiration gazeuse, pour éviter des entrainements excessifs de liquide vers les moyens d'aspiration gazeuse, ces entrainements liquides pouvant être dommageables au bon fonctionnement de ces moyens d'aspiration gazeuse.

Avantageusement, le procédé selon l'invention peut comprendre, préalablement à l'étape b) et préférentiellement après une phase de drainage telle que décrite ci-dessus, une phase de séchage du milieu granulaire, réalisée au moyen de moyens pour augmenter la température du milieu granulaire. Cette phase de séchage permet un séchage accéléré comparé à une phase de drainage telle que décrite ci-dessus qui serait réalisée sur un temps suffisamment long pour aboutir au séchage du milieu granulaire. Selon une mise en oeuvre de l'invention, on peut réaliser cette phase de séchage du milieu granulaire en raccordant des moyens d'insufflation gazeuse au système selon l'invention de manière à engendrer un flux ascendant ou descendant de gaz au travers du milieu granulaire, et en chauffant préalablement le gaz avant son entrée dans l'enceinte. Le gaz peut par exemple être chauffé au moyen d'une source de chaleur (par exemple une résistance chauffante, un échangeur de chaleur) située entre les moyens d'insufflation gazeuse et l'ouverture à laquelle sont connectés les moyens d'insufflation gazeuse. Selon cette mise en oeuvre, les moyens d'insufflation gazeuse peuvent être connectés au système selon l'invention au niveau de l'ouverture des moyens de régénération par fluidisation du milieu granulaire située au-dessus du milieu granulaire, ou bien au niveau de l'ouverture supplémentaire disposée sous le support du milieu granulaire tel que décrite ci-dessus, ou encore toute autre ouverture. De préférence, le gaz utilisé est un gaz peu chargé en vapeur d'eau. Selon une conception de cette mise en oeuvre de l'invention, les moyens d'insufflation gazeuse peuvent consister en un sèche-cheveux. Selon un autre mode réalisation de l'invention, on peut réaliser cette phase de séchage du milieu granulaire par augmentation de la température du milieu granulaire en faisant percoler un liquide chaud au travers du milieu granulaire, ou en chauffant les parois du milieu granulaire. Le chauffage de la paroi du milieu granulaire peut être réalisé par exemple en disposant une résistance chauffante au contact de la paroi du milieu granulaire, ou dans la paroi même du milieu granulaire. Avantageusement, le milieu granulaire est chauffé à des températures comprises entre 30 et 90°C, préférentiellement comprises au moins entre 50 et 70°C. De telles températures sont aptes à permettre l'évacuation de plus de 95% de l'humidité résiduelle, présente dans le milieu granulaire au début du séchage, dans un délai inférieur à 30 minutes, voire inférieur à 10 minutes.

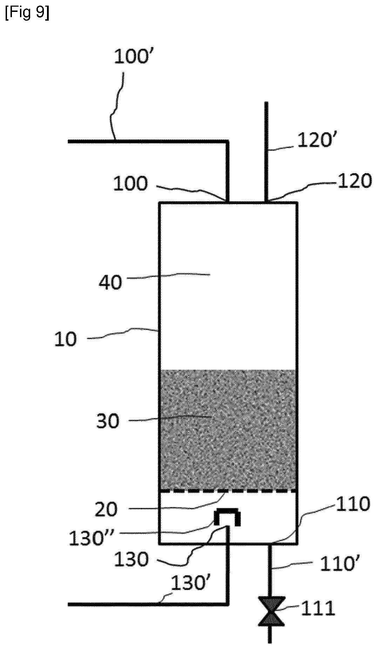

La figure 9 présente une variante du mode de réalisation de la figure 1 (ainsi, les éléments communs ne seront pas décrits à nouveau), configurée pour mettre en oeuvre une phase de drainage du milieu granulaire suivie d'une phase de séchage du milieu granulaire, avant de régénérer celui-ci. Pour cette configuration, une ouverture supplémentaire 130 est aménagée dans l'enceinte à une côte supérieure à la côte de la paroi inférieure de l'enceinte, cette ouverture 130 étant destinée à être connectée à des moyens d'aspiration gazeuse (non représentés) par la conduite 130'. Par ailleurs, cette ouverture 130 est surmontée par un déflecteur 130" permettant de dévier l'écoulement gravitaire de liquide, à travers le milieu granulaire 30, autour de l'ouverture 130, tout en laissant passer le gaz qui subit de manière infiniment plus faible les effets de la pesanteur. La conduite 110', permettant de connecter l'ouverture 110 à un système d'évacuation des eaux usées (non représenté), est munie d'une vanne 111 permettant l'évacuation (vanne ouverte) de l'effluent liquide accumulé avant et pendant la phase de drainage.

Plus précisément, lors de la phase de drainage du milieu granulaire, le système est connecté aux moyens d'aspiration gazeuse à travers l'ouverture 130 et la canalisation 130', l'air étant aspiré du milieu ambiant à travers l'ouverture 120. L'aspiration étant en fonctionnement, le lit est traversé par un courant gazeux à une vitesse comprise préférentiellement entre 0.1 et 5 m/s, préférentiellement comprise autour de 0.3 à 3 m/s. Le gaz favorise l'écoulement du liquide accumulé dans le milieu granulaire pendant les phases de filtration successives. Le liquide résiduel coule donc à travers le milieu granulaire 30 et le support 20 et s'accumule autour du conduit 130' sous l'ouverture 130 dans l'espace situé dans le système 10 sous le support 20. A l'issue du drainage qui peut durer quelques minutes, l'aspiration gazeuse est arrêtée. Le liquide accumulé autour du conduit 130' est évacué par la canalisation 110 en ouvrant la vanne 111.

Puis, le milieu granulaire ayant subi un drainage est ensuite séché avant d'être régénéré. On peut, dans cette configuration, maintenir connectés les moyens d'aspiration gazeuse à l'ouverture 130 et connecter un sèche-cheveux (non représenté) à l'ouverture 120 par l'intermédiaire du conduit 120'. De l'air ambiant chauffé à 50°C environ entre alors dans le système par l'ouverture 120, traverse le milieu filtrant en lui cédant sa chaleur, et en se chargeant progressivement avec l'humidité résultant de l'évaporation de l'eau dictée par les conditions locale d'équilibre thermodynamique.

Une fois cette phase de séchage réalisée, on procède à la régénération du milieu granulaire, en l'absence d'humidité excessive pouvant nuire à la fluidisation des particules. Les moyens d'aspiration gazeuse sont alors connectés à l'ouverture 120, le gaz fluidisant le milieu granulaire entrant par l'ouverture 110.

Selon un mode de mise en oeuvre de l'invention, on commande les phases de filtration et/ou de régénération au moyen des moyens de contrôle du système pour la filtration de microfibres décrits ci-dessus, par exemple au moyen de vannes 2 voies, des vannes 3 voies, des vannes 6 voies rotatives, et/ou des clapets anti-retour, tel que décrit ci-dessus, et en particulier dans les modes de réalisation des figures 3 à 7b.

De manière avantageuse, le procédé selon l'invention comprend au moins une étape préliminaire (c'est-à-dire avant l'étape A) de prétraitement de l'effluent liquide, avant son arrivée sur le milieu granulaire.

Selon une mise en oeuvre de l'invention, cette étape préliminaire de prétraitement de l'effluent liquide peut comprendre une sous-étape d'injection d'au moins un agent floculant dans l'effluent liquide, par exemple au moyen des moyens d'injection d'un agent floculant tels que décrits ci-dessus. Un agent floculant permet de favoriser l'agglomération des fibres les plus petites, ce qui facilite leur séparation de l'effluent liquide au passage dans le milieu granulaire. On peut par exemple utiliser un agent floculant sous la forme de sels minéraux à cations polyvalents comme le sulfate d'alumine ou le chlorure ferrique, la silice activée, ou des polyélectrolytes organiques naturels (amidons, alginate) ou de synthèse (polymères de masse moléculaire élevée comme les polycrylamides ou les polyvinylamines). L'injection d'un agent floculant sera préférentiellement réalisée à une faible teneur, comprise généralement entre 1 et 20 ppm du liquide de vidange, et on utilisera de préférence un dispositif favorisant le mélange dudit agent floculant dans l'effluent liquide. La floculation est particulièrement intéressante dans le cas où les microfibres ont des dimensions de l'ordre du micron ou inférieures au micron. L'agent floculant peut également être injecté en même temps que la lessive destinée au lavage des textiles, et éventuellement être combiné à la lessive.

Alternativement ou cumulativement, l'étape préliminaire de prétraitement de l'effluent liquide peut comprendre une sous-étape de décantation de l'effluent liquide, réalisée par exemple au moyen d'une chambre de décantation disposée en amont de l'enceinte du système selon l'invention tel que décrit ci-dessus. Une chambre de décantation permet la sédimentation par gravité des fibres les plus grosses. Une telle sous-étape préliminaire de décantation peut permettre de capter les plus grosses fibres et de limiter le colmatage trop rapide du milieu granulaire, qui pourra alors capter plus efficacement la majorité des plus petites fibres.

Alternativement ou cumulativement, l'étape préliminaire de prétraitement de l'effluent liquide peut comprendre une sous-étape de passage de l'effluent liquide dans une chambre de séparation cyclonique (tel qu'un hydrocyclone) disposée en amont de l'enceinte du système selon l'invention tel que décrit ci-dessus. Une chambre de séparation cyclonique (tel qu'un hydrocyclone) permet de séparer les plus grosses fibres en induisant une vorticité et un champs de force centrifuge favorisant la séparation. Une telle sous-étape préliminaire peut permettre de capter les plus grosses fibres et de limiter le colmatage trop rapide du milieu granulaire, qui pourra alors capter plus efficacement la majorité des plus petites fibres.

De manière avantageuse, l'étape préliminaire de prétraitement de l'effluent liquide peut comprendre une sous-étape d'injection d'au moins un agent floculant dans l'effluent liquide, suivie d'une sous-étape de décantation de l'effluent liquide et/ou d'une sous-étape de séparation cyclonique. L'agent floculant permet de favoriser l'agglomération des fibres les plus petites, ce qui va augmenter l'efficacité de la sous-étape de décantation et/ou de séparation cyclonique, avant le passage de l'effluent liquide, déjà déchargé des plus grosses fibres et/ou d'agglomérats de fibres, dans le milieu granulaire.

Avantageusement, le procédé selon l'invention comprend en outre au moins une étape postérieure à l'étape de régénération, consistant en la collecte des microfibres issues de la phase de régénération, par exemple au moyen d'une chambre cyclonique ou d'un filtre (par exemple à membrane) placés en aval des moyens de régénération par fluidisation dudit milieu granulaire décrits ci-dessus.

Ainsi, le système et le procédé selon l'invention permettent de filtrer les microfibres d'un effluent liquide, issu des phases de lavage, de rinçage et/ou d'essorage d'un dispositif de traitement de textiles, avec une efficacité de captation des microfibres supérieures à 50 microns supérieure au moins à 80%. Le système et le procédé selon l'invention ne nécessitent pas de consommables, et peuvent être utilisés sur une longue durée, grâce à la possibilité de régénérer le milieu granulaire dans lequel les microfibres peuvent s'accumuler au cours du temps.

L'invention concerne également un dispositif de lavage de textiles, tel qu'un lave-linge, comprenant au moins un système pour la filtration de microfibres contenues dans un effluent liquide selon l'un quelconque des modes de réalisation décrits ci-dessus.

Comme il va de soi, l'invention ne se limite pas aux seules formes de réalisation du système et du procédé, décrits et illustrés ci-dessus à titre d'exemple, elle embrasse au contraire toutes les variantes de réalisation, ainsi que toutes les combinaisons, de ces formes de réalisation, de manière à combiner leurs effets. Par exemple, les modes de réalisation des figures 2a à 2f peuvent être combinés entre eux. Ces modes de réalisations peuvent être également combinés aux modes de réalisation des figures 3 à 6, et/ou des figures 7a à 7b et/ou de la figure 8. Ces modes de réalisation peuvent être également combinés au mode de réalisation de la figure 9.

### Exemples

L'exemple d'application décrit ci-après concerne une application du système et du procédé de filtration de microfibres selon l'invention à un lave-linge individuel.

Plus précisément, le lavage-linge de cet exemple a une capacité de lavage de 5kg de linge, et utilise pour chaque lavage une quantité d'eau totale maximum de 501. Les cycles d'évacuation des eaux de lavage pendant les différentes phases du programme sont variables en fonction des choix de l'utilisateur mais le lave-linge est caractérisé par le fait que la quantité la plus importante qu'il est possible d'évacuer au cours d'une phase pendant le lavage est de 15l, l'évacuation du liquide s'effectuant en 3 mn. Entre deux cycles d'évacuation du lave-linge, le temps est d'environ 15 min au minimum. La teneur moyenne en fibres dans les eaux d'évacuation est voisine de 0.02 g/l, correspondant à un taux de libération moyen des fibres de 0.02% par rapport au poids de linge lavé, et à une quantité moyenne de fibres à collecter par le filtre à chaque lavage de 1g en moyenne pour 5 kg de linge lavé.

Le lave-linge évacue les liquides de vidange à travers un point d'évacuation situé à la base du lave-linge à 5 cm du sol. Un point de raccordement au tout à l'égout est disponible à une hauteur située à 15 cm au-dessus du point d'évacuation du lave-linge (donc à 40 cm du sol sur lequel repose le lave-linge).

Pour cet exemple d'application, le système de filtration selon la conception décrite dans la figure 5 est incorporé directement dans le lave-linge. Les références citées ci-dessous correspondent donc à celles de la figure 5. Pour cet exemple d'application, l'enceinte 10 contenant le milieu granulaire 30 est cylindrique, de diamètre interne 25 cm et de 60 cm de haut. Le milieu granulaire 30 est disposé sur une hauteur de 25 cm dans l'enceinte 10. Il est surmonté par un volume libre 40 d'une hauteur de 30 cm, dont le volume permet l'accumulation de 15 I d'effluent liquide. Le milieu granulaire repose sur un support 20 sous la forme d'une grille dont la taille des mailles est de 0.15 mm. Sous la grille, un espace vide de 50 mm permet de collecter le liquide sous le lit filtrant Le milieu granulaire 30 est constitué de sable dont le diamètre moyen est de 0.5mm, et tel que 90% des particules de sable ont une taille comprise entre 0.3 et 0.7mm. La masse volumique moyenne des grains de sable est estimée à 2550 kg/m3. La porosité (espace interstitiel) du milieu granulaire 30 est estimée à 41% du volume granulaire après régénération.

Un court-circuit de 10 mm de diamètre interne et de 12 mm de diamètre externe muni d'un clapet antiretour traverse le lit (comme représenté sur la figure 4).

Le système pour la filtration selon cet exemple d'application est connecté au lave-linge grâce à un flexible 100' qui relie la conduite de vidange du lave-linge 100" à la vanne 3 voies 58 en située à un point haut à 105 cm au-dessus de la sortie de l'évacuation du lave-linge, soit à 110 cm du sol. L'ouverture 110 est donc encore située au-dessus de la sortie de l'évacuation du lave-linge, ce qui permet de connecter l'ouverture 110 au système d'évacuation habituel des eaux usées, avec un siphon et d'évacuer le liquide de rinçage filtré par gravité.

Initialement la vanne 3 voies 58 est en position permettant de filtrer le liquide de vidange, ou autrement dit, l'ouverture 100 est ouverte et l'ouverture 120 est fermée. Lorsque le milieu granulaire 30 est propre, juste après une régénération, les caractéristiques du lit permettent une filtration avec un débit de 6l/mn en créant une perte de charge inférieure à 2000 Pa, correspondant à une hauteur hydrostatique de 20 cm inférieure à la hauteur du volume libre 40. De ce fait, la filtration par percolation du lit peut s'effectuer en moins de 4 mn. Lorsque le milieu granulaire 30 est encrassé après accumulation d'environ 100 g de microfibres, la perte de charge a doublé et correspond à environ 4000 Pa, soit une hauteur hydrostatique de 40 cm toujours inférieure à la hauteur du volume libre 30. Ces caractéristiques permettent d'assurer une filtration efficace du liquide de vidange pendant une centaine de lavages.

Au bout d'une centaine de lavages, la vanne trois-voies 58 est actionnée pour régénérer le milieu filtrant. A l'issue du dernier lavage, l'ouverture 100 est fermée et l'ouverture 120 est ouverte. Après avoir attendu 5h pour permettre le drainage et le séchage du milieu granulaire 30, on connecte à l'ouverture 120 un aspirateur commercial muni d'un sac filtrant jetable, permettant de créer un courant convectif d'air ascendant à travers le milieu granulaire 30, l'air pénétrant par l'ouverture 130 muni du clapet anti-retour 59 qui s'ouvre, l'ouverture 110 étant automatiquement fermée grâce au clapet anti-retour 60. L'aspirateur permet d'aspirer 30l/s avec une aspiration de 40 kPa. La vitesse de fluidisation des particules est de 19.5 cm/s. Il faut donc un débit minimum de 10 I/s pour fluidiser le lit. L'utilisation de l'aspirateur qui aspire 30 l/s permet donc de fluidiser le lit à une vitesse correspondant donc à 3 fois la vitesse minimale de fluidisation. L'aspiration nécessaire pour compenser la perte de charge du milieu granulaire à l'état fluidisé est d'environ 4000 Pa ce qui est bien inférieur à la capacité d'aspiration de l'aspirateur. Le lit est donc bien fluidisé, ce qui permet d'évacuer les microfibres vers le sac filtrant. A l'issue de la régénération, l'aspiration est arrêtée et les particules de sable sédimentent pour reformer le milieu filtrant. La vanne trois-voies 58 est actionnée pour revenir en phase de filtration, c'est-à-dire que l'ouverture 100 est ouverte et l'ouverture 120 est fermée.

Le système et le procédé pour la filtration de microfibres selon cette conception a permis d'éliminer entre 80 et 90% des fibres de longueur supérieure à environ 50 microns.

Les dimensions du système de filtration décrit dans l'exemple d'application pourraient être réduites en optimisant les conditions opératoires du lave-linge, par exemple en considérant des vidanges plus fréquentes mais d'un volume moindre.

## Revendications

1. Système pour la filtration de microfibres contenues dans un effluent liquide issu d'un dispositif de traitement de textiles, ledit système étant destiné à être raccordé à une conduite pour la vidange dudit dispositif de traitement de textiles, **caractérisé en ce que** ledit système comprend au moins :
- une enceinte (10) comprenant un milieu granulaire (30) occupant une portion de l'espace de ladite enceinte (10), ledit milieu granulaire (30) étant disposé sur un support (20) de manière à laisser un volume libre (40) dans ladite enceinte (10) au-dessus dudit milieu granulaire (30), ledit support (20) étant perméable au moins audit effluent liquide ;
- des moyens (100) pour le passage par percolation dudit effluent liquide au travers dudit milieu granulaire (30), comprenant au moins une ouverture (100) aménagée dans ladite enceinte (10) et disposée au-dessus dudit milieu granulaire (30) ;
- des moyens d'évacuation (110) dudit effluent liquide comprenant au moins une ouverture (110) aménagée dans ladite enceinte (10) et disposée sous ledit support (20) dudit milieu granulaire (30) ;
- des moyens de connexion (120, 130) à des moyens de régénération par fluidisation dudit milieu granulaire (30), **caractérisé en ce que** les moyens de connexion comprennent au moins une ouverture (120) aménagée dans ladite enceinte (10) et disposée au-dessus dudit milieu granulaire (30).

2. Système selon la revendication 1, dans lequel lesdits moyens (120, 130) de connexion auxdits moyens de régénération par fluidisation dudit milieu granulaire (30) comprennent une ouverture supplémentaire (130) aménagée dans ladite enceinte (10) et disposée sous ledit support (20) dudit milieu granulaire (30), ladite ouverture supplémentaire (130) desdits moyens de connexion étant apte à être connectée à des moyens pour une admission d'un gaz et/ou pour une insufflation d'un gaz.

3. Système selon l'une des revendications précédentes, dans lequel lesdits moyens d'évacuation (110) dudit effluent liquide comprennent un circuit extérieur (140) à ladite enceinte (10), raccordé à ladite enceinte (10) pour court-circuiter ledit milieu granulaire (30) en cas d'accumulation dudit effluent liquide dans ledit volume libre (40) de ladite enceinte (10) au-dessus dudit milieu granulaire (30).

4. Système selon l'une des revendications précédentes 1 à 2, dans lequel lesdits moyens d'évacuation (110) dudit effluent liquide comprennent une conduite (140) traversant au moins ledit milieu granulaire (30) pour court-circuiter ledit milieu granulaire (30) en cas d'une accumulation dudit effluent liquide dans ledit volume libre (40) de ladite enceinte (10) au-dessus dudit milieu granulaire (30), ladite conduite (140) étant préférentiellement munie d'un déflecteur (56) dans sa partie supérieure.

5. Système selon la revendication 3, dans lequel ledit circuit extérieur (140) à ladite enceinte comporte en outre un détecteur de liquide, de préférence relié à une alarme.

6. Système selon la revendication 4, dans lequel ladite conduite (140) desdits moyens d'évacuation (110) dudit effluent liquide comporte en outre un détecteur de liquide, de préférence relié à une alarme.

7. Système selon l'une des revendications précédentes, comprenant en outre des moyens de contrôle (51, 52, 53, 54, 55, 57, 58, 59, 60, 61, 62) desdits moyens de passage par percolation (100) dudit effluent liquide au travers dudit milieu granulaire (30) et/ou desdits moyens d'évacuation (110) dudit effluent liquide, et/ou desdits moyens de connexion (120, 130) auxdits moyens de régénération par de fluidisation dudit milieu granulaire (30).

8. Système selon la revendication 7, dans lequel lesdits moyens de contrôle peuvent comprendre au moins une vanne 2 voies (51, 52, 53, 54, 55), et/ou au moins une vanne 3 voies (58, 61), et/ou au moins un clapet anti-retour (57, 59, 60), et/ou une vanne 6 voies rotative (62).

9. Système selon l'une des revendications précédentes, comprenant en outre une chambre de décantation et/ou une chambre de séparation cyclonique et/ou une chambre d'accumulation (11) dudit effluent liquide, disposées en amont de ladite enceinte (10), et raccordées auxdits moyens (100) pour le passage par percolation dudit effluent liquide au travers dudit milieu granulaire (30).

10. Système selon l'une des revendications précédentes, comprenant en outre des moyens d'injection d'au moins un agent floculant dans ledit effluent liquide, lesdits moyens d'injection étant disposés pour une injection dudit au moins un agent floculant dans ledit effluent liquide en amont dudit milieu granulaire (30).

11. Système selon l'une des revendications précédentes, dans lequel ledit milieu granulaire (30) comprend des particules de sable, des billes de verre concassé ou des billes de verre brutes, des particules formées à base de zéolithe naturelle ou synthétique, à base d'alumine, ou encore à base de résines ou de plastique.

12. Système selon l'une des revendications précédentes, ledit milieu granulaire (30) comprend des particules de taille comprise entre 0.1 mm et 2 cm pour au moins 80% en poids desdites particules, préférentiellement comprise entre 0.3 et 2.5 mm pour au moins 90% en poids desdites particules.

13. Système selon l'une des revendications précédentes, dans lequel un distributeur de liquide est disposé entre ledit milieu granulaire (30) et ladite ouverture (100) desdits moyens (100) pour le passage par percolation dudit effluent liquide au travers dudit milieu granulaire (30) et/ou, lorsque lesdits moyens de régénération par fluidisation dudit milieu granulaire (30) comprennent des moyens d'aspiration gazeuse, un distributeur de gaz est disposé entre ledit milieu granulaire (30) et une ouverture destinée à l'admission du gaz desdits moyens d'aspiration gazeuse.

14. Procédé pour la filtration de microfibres contenues dans un effluent liquide issu d'un dispositif de traitement de textiles, ledit procédé étant mis en oeuvre au moyen d'un système pour la filtration de microfibres selon l'une quelconque des revendications précédentes, **caractérisé en ce que** ledit procédé comprend au moins les étapes suivantes :
A ) on réalise au moins une phase de filtration desdites microfibres, ladite phase de filtration comprenant au moins un passage par percolation dudit effluent liquide au travers dudit milieu granulaire (30) au moyen au moins desdits moyens (100) pour le passage par percolation dudit effluent liquide au travers dudit milieu granulaire (30), et l'évacuation dudit effluent liquide filtré au moyen au moins desdits moyens (110) d'évacuation dudit effluent liquide ;
B) on réalise une phase de régénération par fluidisation dudit milieu granulaire (30) en raccordant lesdits moyens de connexion (120, 130) auxdits moyens de régénération par fluidisation dudit milieu granulaire (30) avec lesdits moyens de régénération par fluidisation dudit milieu granulaire (30).

15. Procédé selon la revendication 14, dans lequel on répète l'étape A) entre 50 et 150 fois, de préférence environ 100 fois, avant de réaliser l'étape B).

16. Procédé selon l'une des revendications 14 à 15, comprenant, préalablement à l'étape A), une étape de prétraitement dudit effluent liquide, ladite étape de prétraitement dudit effluent liquide comprenant au moins une injection d'au moins d'un agent floculant dans ledit effluent liquide et/ou au moins une décantation dudit effluent liquide et/ou au moins une séparation cyclonique dudit effluent liquide.

17. Procédé selon l'une des revendications 14 à 16, comprenant, préalablement à l'étape B), une phase de drainage dudit milieu granulaire, réalisée au moyen de moyens d'aspiration gazeuse raccordés audit système de manière à générer un flux descendant de gaz au travers dudit milieu granulaire, et/ou une phase de séchage dudit milieu granulaire, réalisée au moyen de moyens pour augmenter la température dudit milieu granulaire.

18. Procédé selon l'une des revendications 14 à 17, dans lequel on commande lesdites phases de filtration et de régénération au moyen desdits moyens de contrôle (51, 52, 53, 54, 55, 57, 58, 59, 60, 61, 62) dudit système pour la filtration de microfibres selon l'une des revendications 5 à 6.

19. Procédé selon l'une des revendications 14 à 18, comprenant en outre au moins une étape postérieure à ladite phase de régénération par fluidisation, consistant en la collecte desdites microfibres issues de ladite phase de régénération, de préférence au moyen d'une chambre cyclonique et/ou d'un filtre à membrane disposés en aval desdits moyens de régénération par fluidisation dudit milieu granulaire (30).

20. Dispositif de lavage de textiles, comprenant au moins un système pour la filtration de microfibres contenues dans un effluent liquide selon l'une quelconque des revendications 1 à 13.

## Patentansprüche

1. System zur Filterung von Mikrofasern, die in einer Ablaufflüssigkeit aus einer Textilbehandlungsvorrichtung enthalten sind, wobei das System dazu bestimmt ist, mit einer Leitung für die Entleerung der Textilbehandlungsvorrichtung verbunden zu sein, **dadurch gekennzeichnet, dass** das System wenigstens Folgendes umfasst:
- eine Einhausung (10), die ein körniges Medium (30) umfasst, das einen Teil des Raums der Einhausung (10) einnimmt, wobei das körnige Medium (30) so auf einem Träger (20) angeordnet ist, dass ein freies Volumen (40) in der Einhausung (10) über dem körnigen Medium (30) belassen ist, wobei der Träger (20) wenigstens für die Ablaufflüssigkeit durchlässig ist;
- Mittel (100) für den Durchtritt durch Perkolation der Ablaufflüssigkeit durch das körnige Medium (30), die wenigstens eine Öffnung (100) umfassen, die in der Einhausung (10) eingerichtet und über dem körnigen Medium (30) angeordnet ist;
- Ableitungsmittel (110) für die Ablaufflüssigkeit, die wenigstens eine Öffnung (110) umfassen, die in der Einhausung (10) eingerichtet und unter dem Träger (20) des körnigen Mediums (30) angeordnet ist;
- Mittel zum Anschluss (120, 130) an Mittel zur Regeneration durch Fluidisierung des körnigen Mediums (30), **dadurch gekennzeichnet, dass** die Anschlussmittel wenigstens eine Öffnung (120) umfassen, die in der Einhausung (10) eingerichtet und über dem körnigen Medium (30) angeordnet ist.

2. System nach Anspruch 1, wobei die Mittel zum Anschluss (120, 130) an die Mittel zur Regeneration durch Fluidisierung des körnigen Mediums (30) eine Zusatzöffnung (130) umfassen, die in der Einhausung (10) eingerichtet und unter dem Träger (20) des körnigen Mediums (30) angeordnet ist, wobei die Zusatzöffnung (130) der Anschlussmittel geeignet ist, an Mittel für einen Einlass eines Gases und/oder für ein Einblasen eines Gases angeschlossen zu sein.

3. System nach einem der vorhergehenden Ansprüche, wobei die Ableitungsmittel (110) für die Ablaufflüssigkeit einen Kreis (140) außerhalb der Einhausung (10) umfassen, der mit der Einhausung (10) verbunden ist, um das körnige Medium (30) im Falle einer Ansammlung der Ablaufflüssigkeit im freien Volumen (40) der Einhausung (10) über dem körnigen Medium (30) zu umgehen.

4. System nach einem der vorhergehenden Ansprüche 1 bis 2, wobei die Ableitungsmittel (110) für die Ablaufflüssigkeit eine Leitung (140) umfassen, die wenigstens das körnige Medium (30) durchquert, um das körnige Medium (30) im Falle einer Ansammlung der Ablaufflüssigkeit im freien Volumen (40) der Einhausung (10) über dem körnigen Medium (30) zu umgehen, wobei die Leitung (140) vorzugsweise in ihrem oberen Abschnitt mit einem Abweiser (56) versehen ist.

5. System nach Anspruch 3, wobei der Kreis (140) außerhalb der Einhausung ferner einen Flüssigkeitsdetektor aufweist, der vorzugsweise mit einer Alarmeinrichtung verbunden ist.

6. System nach Anspruch 4, wobei die Leitung (140) der Ableitungsmittel (110) der Ablaufflüssigkeit ferner einen Flüssigkeitsdetektor aufweist, der vorzugsweise mit einer Alarmeinrichtung verbunden ist.

7. System nach einem der vorhergehenden Ansprüche, ferner umfassend Mittel zur Steuerung (51, 52, 53, 54, 55, 57, 58, 59, 60, 61, 62) der Mittel zum Durchtritt durch Perkolation (100) der Ablaufflüssigkeit durch das körnige Medium (30) und/oder der Ableitungsmittel (110) der Ablaufflüssigkeit und/oder der Mittel zum Anschluss (120, 130) an die Mittel zur Regeneration durch Fluidisierung des körnigen Mediums (30).

8. System nach Anspruch 7, wobei die Steuermittel wenigstens ein 2-Wege-Ventil (51, 52, 53, 54, 55) und/oder wenigstens ein 3-Wege-Ventil (58, 61) und/oder wenigstens eine Rückströmsperre (57, 59, 60) und/oder ein drehbares 6-Wege-Ventil (62) umfassen können.

9. System nach einem der vorhergehenden Ansprüche, das ferner eine Klärkammer und/oder eine Zyklonabscheidekammer und/oder eine Sammelkammer (11) der Ablaufflüssigkeit umfasst, die stromauf der Einhausung (10) angeordnet sind und an die Mittel (100) für den Durchtritt durch Perkolation der Ablaufflüssigkeit durch das körnige Medium (30) angeschlossen sind.

10. System nach einem der vorhergehenden Ansprüche, das ferner Mittel zur Einspritzung wenigstens eines Flockungsmittel in die Ablaufflüssigkeit umfasst, wobei die Einspritzmittel für eine Einspritzung des wenigstens einen Flockungsmittels in die Ablaufflüssigkeit stromauf des körnigen Mediums (30) angeordnet sind.

11. System nach einem der vorhergehenden Ansprüche, wobei das körnige Medium (30) Sandpartikel, Kugeln aus zerkleinertem Glas oder rohe Glaskugeln, Partikel, die auf Basis von natürlichem oder synthetischem Zeolith, auf Basis von Tonerde oder auch auf Harz- oder Kunststoffbasis gebildet sind, umfasst.

12. System nach einem der vorhergehenden Ansprüche, wobei das körnige Medium (30) Partikel mit einer Größe zwischen 0,1 mm und 2 cm für wenigstens 80 Gewichts-% der Partikel, vorzugsweise zwischen 0,3 und 2,5 mm für wenigstens 90 Gewichts-% der Partikel umfasst.

13. System nach einem der vorhergehenden Ansprüche, wobei ein Flüssigkeitsverteiler zwischen dem körnigen Medium (30) und der Öffnung (100) der Mittel (100) für den Durchtritt durch Perkolation der Ablaufflüssigkeit durch das körnige Medium (30) angeordnet ist, und/oder, wenn die Mittel zur Regeneration durch Fluidisierung des körnigen Mediums (30) Gasansaugmittel umfassen, ein Gasverteiler zwischen dem körnigen Medium (30) und einer Öffnung, die zum Einlass des Gases der Gasansaugmittel bestimmt ist, angeordnet ist.

14. Verfahren zur Filterung von Mikrofasern, die in einer Ablaufflüssigkeit aus einer Textilbehandlungsvorrichtung enthalten sind, wobei das Verfahren mittels eines Systems zur Filterung von Mikrofasern nach einem der vorhergehenden Ansprüche durchgeführt wird, **dadurch gekennzeichnet, dass** das Verfahren wenigstens die folgenden Schritte umfasst:
A) Es wird wenigstens eine Phase des Filtrierens der Mikrofasern durchgeführt, wobei die Phase des Filtrierens wenigstens einen Durchtritt durch Perkolation der Ablaufflüssigkeit durch das körnige Medium (30) mittels wenigstens der Mittel (100) für den Durchtritt durch Perkolation der Ablaufflüssigkeit durch das körnige Medium (30) und das Ableiten der filtrierten Ablaufflüssigkeit mittels wenigstens der Ableitungsmittel (110) für die Ablaufflüssigkeit umfasst;
B) Es wird eine Phase des Regenerierens durch Fluidisierung des körnigen Mediums (30) durch Verbindung der Mittel zum Anschluss (120, 130) an die Mittel zur Regeneration durch Fluidisierung des körnigen Mediums (30) mit den Mitteln zur Regeneration durch Fluidisierung des körnigen Mediums (30) durchgeführt.

15. Verfahren nach Anspruch 14, wobei Schritt A) zwischen 50 und 150 mal, vorzugsweise ungefähr 100 mal wiederholt wird, bevor der Schritt B) durchgeführt wird.

16. Verfahren nach einem der Ansprüche 14 bis 15, umfassend vor dem Schritt A) einen Schritt des Vorbehandelns der Ablaufflüssigkeit, wobei der Schritt des Vorbehandelns der Ablaufflüssigkeit wenigstens eine Einspritzung wenigstens eines Flockungsmittels in die Ablaufflüssigkeit und/oder wenigstens ein Klären der Ablaufflüssigkeit und/oder wenigstens eine Zyklonabscheidung der Ablaufflüssigkeit umfasst.

17. Verfahren nach einem der Ansprüche 14 bis 16, umfassend, vor dem Schritt B), eine Phase des Drainierens des körnigen Mediums, die mittels Gasansaugmitteln durchgeführt wird, die mit dem System verbunden sind, so dass sie einen Abwärtsgasstrom durch das körnige Medium erzeugen, und/oder eine Phase des Trocknens des körnigen Mediums, die mithilfe von Mitteln zur Erhöhung der Temperatur des körnigen Mediums durchgeführt wird.

18. Verfahren nach einem der Ansprüche 14 bis 17, wobei die Phasen des Filtrierens und des Regenerierens mithilfe der Mittel zur Steuerung (51, 52, 53, 54, 55, 57, 58, 59, 60, 61, 62) des Systems zur Filterung von Mikrofasern nach einem der Ansprüche 5 bis 6 gesteuert werden.

19. Verfahren nach einem der Ansprüche 14 bis 18, ferner umfassend wenigstens einen Schritt nach der Phase des Regenerierens durch Fluidisierung, der im Sammeln der Mikrofasern aus der Phase des Regenerierens, vorzugsweise mittels einer Zyklonkammer und/oder eines Membranfilters, die stromab der Mittel zur Regeneration durch Fluidisierung des körnigen Mediums (30) angeordnet sind, besteht.

20. Textilwaschvorrichtung umfassend wenigstens ein System zur Filterung von Mikrofasern, die in einer Ablaufflüssigkeit enthalten sind, nach einem der Ansprüche 1 bis 13.

## Claims

1. System for filtering microfibres contained in a liquid effluent from a textile treatment device, said system being intended to be connected to a drain pipe for emptying said textile treatment device, **characterized in that** said system comprises at least:
an enclosure (10) comprising a granular medium (30) occupying a portion of the space of said enclosure (10), said granular medium (30) being arranged on a support (20) so as to leave a free volume (40) in said enclosure (10) above said granular medium (30), said support (20) being permeable at least to said liquid effluent;
- means (100) for percolating said liquid effluent through said granular medium (30) and comprising at least one opening (100) formed in said enclosure (10) and positioned above said granular medium (30);
- discharge means (110) for discharging said liquid effluent and comprising at least one opening (110) formed in said enclosure (10) and positioned beneath said support (20) of said granular medium (30);
- connecting means (120, 130) for connection to means for regenerating said granular medium (30) by fluidization, **characterized in that** the connecting means comprise at least one opening (120) formed in said enclosure (10) and positioned above said granular medium (30).

2. System according to Claim 1, wherein said connecting means (120, 130) for connection to said means for regenerating said granular medium (30) by fluidization comprise an additional opening (130) formed in said enclosure (10) and positioned beneath said support (20) for said granular medium (30), said additional opening (130) of said connecting means being able to be connected to gas-suction means or to gas-blowing means.

3. System according to one of the preceding claims, wherein said discharge means (110) for discharging said liquid effluent comprise an external circuit (140) external to said enclosure (10), connected to said enclosure (10) in such a way as to bypass said granular medium (30) in the event of a buildup of said liquid effluent in said free volume (40) of said enclosure (10) above said granular medium (30).

4. System according to one of the preceding Claims 1 to 2, wherein said discharge means (110) for discharging said liquid effluent comprise a pipe (140) passing through at least said granular medium (30) so as to bypass said granular medium (30) in the event of a buildup of said liquid effluent in said free volume (40) of said enclosure (10) above said granular medium (30), said pipe (140) preferably being fitted with a deflector (56) in its upper part.

5. System according to Claim 3, wherein said external circuit (140) external to said enclosure further comprises a liquid detector, preferably connected to an alarm.

6. System according to Claim 4, wherein said pipe (140) of said discharge means (110) for discharging said liquid effluent further comprises a liquid detector, preferably connected to an alarm.

7. System according to one of the preceding claims, further comprising control means (51, 52, 53, 54, 55, 57, 58, 59, 60, 61, 62) for controlling said means (100) for percolating said liquid effluent through said granular medium (30) and/or said discharge means (110) for discharging said liquid effluent, and/or said connecting means (120, 130) for connection to said means for regenerating said granular medium (30) by fluidization.

8. System according to Claim 7, wherein said control means may comprise at least a 2-way valve (51, 52, 53, 54, 55) and/or at least a 3-way valve (58, 61) and/or at least a nonreturn valve (57, 59, 60) and/or a rotary 6-way valve (62).

9. System according to one of the preceding claims, further comprising a settling chamber and/or a cyclone separation chamber and/or an accumulation chamber (11) for said liquid effluent, this or these being positioned upstream of said enclosure (10) and connected to said means (100) for percolating said liquid effluent through said granular medium (30).

10. System according to one of the preceding claims, further comprising injection means for injecting at least one flocculant into said liquid effluent, said injection means being arranged in such a way as to inject said at least one flocculant into said liquid effluent upstream of said granular medium (30).

11. System according to one of the preceding claims, wherein said granular medium (30) contains particles of sand, beads of crushed glass or beads of raw glass, particles based on natural or synthetic zeolite, based on alumina or else based on resins or on plastic.

12. System according to one of the preceding claims, said granular medium (30) comprising particles of a size ranging between 0.1 mm and 2 cm for at least 80 wt% of said particles, preferably ranging between 0.3 mm and 2.5 mm for at least 90 wt% of said particles.

13. System according to one of the preceding claims, wherein a liquid distributor is arranged between said granular medium (30) and said opening (100) of said means (100) for percolating said liquid effluent through said granular medium (30) and/or, when said means for regenerating said granular medium (30) by fluidization comprise a gas-suction means, a gas distributor is arranged between said granular medium (30) and an opening intended to admit the gas and belonging to said gas-suction means.

14. Method for filtering microfibres contained in a liquid effluent from a textile treatment device, said method being implemented by means of a system for filtering microfibres according to any one of the preceding claims, **characterized in that** said method comprises at least the following steps:
A) performing at least one phase of filtering said microfibres, said filtering phase comprising at least one pass of percolating said liquid effluent through said granular medium (30) by a means at least of said means (100) for percolating said liquid effluent through said granular medium (30), and discharging said filtered liquid effluent by means of said liquid-effluent discharge means (110);
B) performing a phase of regenerating said granular medium (30) by fluidization by connecting said connecting means (120, 130) for connection to said means for regenerating said granular medium (30) by fluidization to said means for regenerating said granular medium (30) by fluidization.

15. Method according to Claim 14, wherein step A) is repeated between 50 and 150 times, preferably about 100 times, before step B) is performed.

16. Method according to one of Claims 14 to 15 comprising, prior to step A), a step of pre-treating said liquid effluent, said step of pretreating said liquid effluent comprising at least an injection of at least one flocculant into said liquid effluent and/or at least a settling of said liquid effluent and/or at least a cyclone separation of said liquid effluent.

17. Method according to one of Claims 14 to 16, comprising, prior to step B), a step of draining said granular medium, performed by means of gas-suction means connected to said system so as to generate a downward stream of gas through said granular medium, and/or a phase of drying said granular medium, performed by means of means for raising the temperature of said granular medium.

18. Method according to one of Claims 14 to 17, wherein said filtering and regenerating phases are controlled by means of said control means (51, 52, 53, 54, 55, 57, 58, 59, 60, 61, 62) for controlling said microfibre-filtration system according to one of Claims 5 to 6.

19. Method according to one of Claims 14 to 18, further comprising at least one step subsequent to said phase of regeneration by fluidization and consisting in collecting said microfibres resulting from said regeneration phase, preferably by means of a cyclone chamber and/or of a membrane filter which are positioned downstream of said means for regenerating said granular medium (30) by fluidization.

20. Device for washing textiles, comprising at least a system for filtering microfibres contained in a liquid effluent according to any one of Claims 1 to 13.
